# EUROPÄISCHE PATENTSCHRIFT

(11) **EP 2 990 892 B1**
(45) Veröffentlichungstag und Bekanntmachung des Hinweises auf die Patenterteilung: **22.05.2019**
(21) Anmeldenummer: 14183024.0
(22) Anmeldetag: 01.09.2014
(51) Int. Cl.: G05B 17/02, G06F 11/22, G06F 11/26

(54) **Verfahren zum Verbinden einer Eingabe/Ausgabe-Schnittstelle eines für das Testen eines Steuergeräts eingerichteten Testgeräts**
Method for connecting an input/output interface of a test device set up to test a control device
Procédé de liaison d'une interface d'entrée/de sortie d'un appareil d'essai destiné à l'essai d'un appareil de commande

(43) Veröffentlichungstag der Anmeldung: 02.03.2016
(73) Patentinhaber: dSPACE digital signal processing and control engineering GmbH, 33102 Paderborn (DE)
(72) Erfinder: Tegethoff, Marc, 33106 Paderborn (DE)

(56) Entgegenhaltungen:
- WO-A1-02/065220
- DE-B3-102013 100 603

## Beschreibung

Die vorliegende Erfindung betrifft die Entwicklung von Steuergeräten, wie sie z. B. in der Automobilindustrie oder in der Luftfahrtindustrie zur Steuerung von technischen Systemen, wie z. B. Motoren oder Bremsen, verwendet werden. Insbesondere betrifft die vorliegende Erfindung Testgeräte, die im Entwicklungsprozess des Steuergeräts verwendet werden.

Die Entwicklung von Steuergeräten ist zu einem hochkomplexen Prozess geworden. So sollen neue Steuergeräte bzw. neue Steuerfunktionen so früh wie möglich im Entwicklungsprozess getestet werden, um die generelle Funktionalität zu überprüfen und die weitere Entwicklungsrichtung vorzugeben. Gegen Ende des Entwicklungsprozesses ist es wichtig, das schon weit entwickelte Steuergerät möglichst umfassend zu testen, um aufgrund der Testergebnisse notwendige Modifikationen vorzunehmen, bevor das Steuergerät in Benutzung bzw. in Serienfertigung geht und im späteren Betrieb unter allen Umständen wie gewünscht arbeitet.

Zwei beispielhafte Schritte des Entwicklungsprozesses, an denen Testgeräte zum Testen des Steuergeräts zum Einsatz kommen, werden nachfolgend beschrieben. Zu einem recht späten Stadium des Entwicklungsprozesses kommen sog. Hardware-in-the-Loop Simulatoren (HIL-Simulatoren) zum Einsatz. Solche HIL-Simulatoren enthalten ein Modell des zu steuernden technischen Systems, wobei das Modell in Software vorliegt. Der HIL-Simulator enthält weiterhin eine Eingabe/Ausgabe-Schnittstelle, an die das schon weit entwickelte, bereits in Hardware gegenständlich vorhandene Steuergerät angeschlossen werden kann. In verschiedenen Simulationsdurchläufen kann nun die Funktionalität des Steuergeräts getestet werden, wobei die Reaktionen des Modells des zu steuernden technischen Systems auf die Signale des Steuergeräts sowie die Reaktionen des Steuergeräts auf von dem Modell des zu steuernden technischen Systems vorgegebene Ereignisse beobachtet werden können. Dabei können sowohl der normale Betrieb als auch Fehler in dem zu steuernden technischen System als auch Fehler in dem Steuergerät simuliert werden.

Demgegenüber ist das sogenannte Rapid Control Prototyping (RCP) ein Entwicklungsschritt, der mehr am Anfang des Entwicklungsprozesses steht. Beim RCP kommt das Testgerät auf Seiten des Steuergeräts zum Einsatz. Das Testgerät enthält ein Modell des zu testenden Steuergeräts. Aufgrund des frühen Entwicklungsstadiums ist das Modell des zu testenden Steuergeräts noch recht rudimentär im Verglich zu dem späteren finalen Steuergerät. Auch ist normalerweise noch keine Hardware-Implementierung des Steuergeräts vorhanden, vielmehr ist das in dem Testgerät vorhandene Modell des zu testenden Steuergeräts ein Software-Modell. Das Testgerät kann über eine Eingabe/Ausgabe-Schnittstelle mit dem zu steuernden technischen System selbst oder mit dem bisher vorhandenen Steuergerät für das zu steuernde technische System verbunden werden. Im ersten Fall besteht eine direkte Verbindung zwischen dem zu testenden Steuergerät, in der Form eines Software-Modells, und dem gegenständlich vorhandenen, zu steuernden technischen System. Im zweiten Fall ist das bisher vorhandene Steuergerät das durch das RCP-Testgerät zu steuernde technische System. Diese Steuerung des bisher vorhandenen Steuergeräts führt zu einer Modifikation der Steuerverfahren des bisher vorhandenen Steuergeräts, wodurch neue Steuer-Funktionalität mittels des von außen angeschlossenen RCP-Testgeräts getestet werden kann.

In beiden genannten Beispielen (HIL-Simulator und RCP-Testgerät) gibt es ein Testgerät, in dem ein Modell vorhanden ist und welches über die Eingabe/Ausgabe-Schnittstelle mit einem externen Gerät verbunden werden muss, so dass der Test durchgeführt werden kann. In dem Fall von RCP enthält das Testgerät ein Modell des zu testenden Steuergeräts und wird mit dem zu steuernden technischen System verbunden. In dem Fall von HIL enthält das Testgerät ein Modell des zu steuernden technischen Systems und wird mit dem zu testenden Steuergerät verbunden. In beiden Fällen wird ein für das Testen des Steuergeräts eingerichtetes Testgerät bereitgestellt, wobei einmal das Steuergerät als Modell getestet wird und einmal das Steuergerät als extern anschließbare Hardware-Implementierung getestet wird.

Wie bereits angedeutet, verfügt das Testgerät über eine Eingabe/Ausgabe-Schnittstelle, über die das Testgerät, je nach Anwendungsfall, mit dem zu steuernden technischen System bzw. mit dem zu testenden Steuergerät verbunden wird. Diese Eingabe/Ausgabe-Schnittstelle wird in dem Testgerät mit dem in dem Testgerät vorhandenen Modell verbunden, so dass das Modell über die Eingabe/Ausgabe-Schnittstelle mit dem zu steuernden technischen System bzw. mit dem zu testenden Steuergerät kommunizieren kann. Für diese Verbindung des Modells mit der Eingabe/Ausgabe-Schnittstelle verfügt das Testgerät über eine Mehrzahl von Eingabe/Ausgabe-Funktionen. Diese Eingabe/Ausgabe-Funktionen stellen das Bindeglied zwischen dem Modell auf der einen Seite und der gegenständlichen Eingabe/Ausgabe-Schnittstelle auf der anderen Seite dar.

Ein und dasselbe Testgerät kann für verschiedene Simulationen verwendet werden. In anderen Worten, ein und dasselbe Testgerät kann mit verschiedenen in dem Testgerät vorhandenen Modellen und mit verschiedenen an das Testgerät angeschlossenen zu testenden Steuergeräten bzw. zu steuernden technischen Systemen verwendet werden. Es ist ersichtlieh, dass für verschiedene angeschlossene Geräte/Systeme und für verschiedene Modelle unterschiedliche Kanäle der Eingabe/Ausgabe-Schnittstelle und unterschiedliche Eingabe/Ausgabe-Funktionen erforderlich sind. Dementsprechend ist es üblich, vor der Durchführung einer bestimmten Simulation bestimmte Verbindungen zwischen der Eingabe/Ausgabe-Schnittstelle auf der einen Seite und den Eingabe/Ausgabe-Funktionen auf der anderen Seite zu erzeugen.

Aus der internationalen Patentanmeldung WO02/065220A1 ist ein Verfahren zum Verbinden einer Eingabe/Ausgabe-Schnittstelle eines für das Testen eines Steuergeräts eingerichteten Testgeräts mit einem in dem Testgerät vorhandenen Modell eines technischen Systems, wobei die Eingabe/Ausgabe-Schnittstelle zum Anschluss des zu testenden Steuergeräts oder zum An-schluss eines zu steuernden technischen Systems ausgebildet ist und das mit der Eingabe/Ausgabe-Schnittstelle zu verbindende Modell ein Modell des zu steuernden technischen Systems oder ein Modell des zu testenden Steuergeräts ist, wobei das Testgerät weiterhin eine Mehrzahl von mit dem Modell verbundenen Eingabe/Ausgabe-Funktionen aufweist, bekannt.

Es gibt allerdings bisher kein zufriedenstellendes Verfahren, das die Verbindung der Eingabe/Ausgabe-Schnittstelle mit den Eingabe/Ausgabe-Funktionen mit vertretbarem Aufwand bei hinreichender Anpassung an den Einzelfall ermöglicht.

Demzufolge wäre es vorteilhaft, ein verbessertes Verfahren zum Verbinden der Eingabe/Ausgabe-Schnittstelle eines für das Testen eines Steuergeräts eingerichteten Testgeräts mit einem in dem Testgerät vorhandenen Modell eines technischen Systems über in dem Testgerät vorhandene Eingabe/Ausgabe-Funktionen zu ermöglichen.

Beispielhafte Ausführungsformen der Erfindung umfassen ein Verfahren zum Verbinden einer Eingabe/Ausgabe-Schnittstelle eines für das Testen eines Steuergeräts eingerichteten Testgeräts mit einem in dem Testgerät vorhandenen Modell eines technischen Systems, wobei die Eingabe/Ausgabe-Schnittstelle zum Anschluss des zu testenden Steuergeräts oder zum Anschluss eines zu steuernden technischen Systems ausgebildet ist und das mit der Eingabe/Ausgabe-Schnittstelle zu verbindende Modell ein Modell des zu steuernden technischen Systems oder ein Modell des zu testenden Steuergeräts ist, wobei das Testgerät weiterhin eine Mehrzahl von mit dem Modell verbundenen Eingabe/Ausgabe-Funktionen aufweist. Das Verfahren weist die folgenden kennzeichnenden Schritte auf:
(a) Bereitstellen einer Schnittstellen-Hierarchiestruktur, die ein Abbild zumindest eines Teils der Eingabe/Ausgabe-Schnittstelle des Testgeräts ist, eine Mehrzahl von Hierarchieebenen aufweist und aus einer ersten Menge von Hierarchieelementen aufgebaut ist, wobei die erste Menge von Hierarchieelementen eine Mehrzahl von Kanälen der Eingabe/Ausgabe-Schnittstelle aufweist, welche die unterste Hierarchieebene der Schnittstellen-Hierarchiestruktur bilden,
(b) Bereitstellen einer Funktions-Hierarchiestruktur, die ein Abbild der Mehrzahl von Eingabe/Ausgabe-Funktionen ist, eine Mehrzahl von Hierarchieebenen aufweist und aus einer zweiten Menge von Hierarchieelementen aufgebaut ist,
(c) Ermöglichen einer manuellen Auswahl eines beliebigen ersten Hierarchieelements aus einer beliebigen ersten Hierarchiestruktur, wobei die erste Hierarchiestruktur entweder die Schnittstellen-Hierarchiestruktur ist, wodurch die Funktions-Hierarchiestruktur als zweite Hierarchiestruktur festgelegt ist, oder wobei die erste Hierarchiestruktur die Funktions-Hierarchiestruktur ist, wodurch die Schnittstellen-Hierarchiestruktur als zweite Hierarchiestruktur festgelegt ist,
(d) Ermöglichen einer manuellen Auswahl eines zweiten Hierarchieelements aus der zweiten Hierarchiestruktur, wobei die Auswahl des zweiten Hierarchieelements nicht auf eine Hierarchieebene der zweiten Hierarchiestruktur beschränkt ist, die mit der Hierarchieebene des ersten Hierarchieelements korrespondiert,
(e) Isolieren einer ersten Teilhierarchiestruktur auf Basis der Auswahl des ersten Hierarchieelements, wobei die erste Teilhierarchiestruktur das erste Hierarchieelement und die von dem ersten Hierarchieelement abwärts gelegenen Hierarchieelemente umfasst,
(f) Isolieren einer zweiten Teilhierarchiestruktur auf Basis der Auswahl des zweiten Hierarchieelements, wobei die zweite Teilhierarchiestruktur das zweite Hierarchieelement und die von dem zweiten Hierarchieelement abwärts gelegenen Hierarchieelemente umfasst,
(g) Bestimmen von kompatiblen Verbindungen zwischen Hierarchieelementen der ersten Teilhierarchiestruktur und Hierarchieelementen der zweiten Hierarchiestruktur, insbesondere Bestimmen von kompatiblen Verbindungen zwischen den Hierarchieelementen der untersten Hierarchieebene der ersten Teilhierarchiestruktur und den Hierarchieelementen der untersten Hierarchieebene der zweiten Teilhierarchiestruktur, und
(h) automatisches Konfigurieren zumindest eines Teils der kompatiblen Verbindungen, so dass das in dem Testgerät vorhandene Modell über zumindest den Teil der kompatiblen Verbindungen mit dem zu testenden Steuergerät bzw. dem zu steuernden technischen System kommunizieren kann.

Das erfindungsgemäße Verfahren stellt einen optimierten Kompromiss zwischen der automatischen Erstellung von kompatiblen Verbindungen auf der einen Seite und der Möglichkeit zur Vorauswahl von Teilhierarchiestrukturen zum Begrenzen des automatischen Erstellens auf der anderen Seite dar. Das Verfahren ermöglicht die Auswahl eines beliebigen ersten Hierarchieelements entweder auf der Eingabe/Ausgabe-Schnittstellen-Seite, d. h. in der Schnittstellen-Hierarchiestruktur, oder auf der Eingabe/Ausgabe-Funktionen-Seite, d. h. in der Funktions-Hierarchiestruktur. Auf diese Weise wird in einer ersten der beiden Hierarchiestrukturen ein Teil der Hierarchiestruktur, d. h. eine Teilhierarchiestruktur, ausgewählt, die einen ersten Teil der für die zu erstellenden Verbindungen zur Verfügung stehenden Auswahlmenge von Hierarchieelementen festlegt. Das Verfahren ermöglicht weiterhin die Auswahl eines zweiten Hierarchieelements aus der jeweils anderen Hierarchiestruktur, d. h. aus der Funktions-Hierarchiestruktur oder der Schnittstellen-Hierarchiestruktur (je nach Auswahl des ersten Hierarchieelements), wodurch eine zweite Teilhierarchiestruktur festgelegt wird. Diese wiederum legt den zweiten Teil der für die zu erstellenden Verbindungen zur Verfügung stehenden Auswahlmenge von Hierarchieelementen fest.

Dadurch, dass bei der Auswahl des zweiten Hierarchieelements keine Beschränkung oder Beeinflussung durch die Hierarchieebene des ersten ausgewählten Hierarchieelements besteht, ist eine sehr flexible Auswahl von Teilhierarchiestrukturen möglich. In anderen Worten, weder eine übereinstimmende Hierarchieebene noch eine übereinstimmende Anzahl von Hierarchieelementen in den beiden Teilhierarchiestrukturen ist erforderlich, noch gibt es irgendeine andere Beschränkung bezüglich des generellen Aufbaus der Teilhierarchiestrukturen für die Auswahl des zweiten Hierarchieelements. Auf diese Weise wird bei der Auswahl des ersten Hierarchieelements und des zweiten Hierarchieelements ein Höchstmaß an Flexibilität ermöglicht.

Dieses Höchstmaß an Flexibilität erlaubt dem Anwender, sei es nun ein menschlicher Benutzer oder ein Programm, welches die genannten Verbindungen in dem Testgerät erstellt, bei jeder Erstellung von kompatiblen Verbindungen zwischen der Eingabe/Ausgabe-Schnittstelle und den Eingabe/Ausgabe-Funktionen eine Abwägung zu treffen, ob für gerade diese Verbindungen die Schnelligkeit des Konfigurationsvorgangs oder die möglichst genaue Anpassung der kompatiblen Verbindungen an den vorliegenden Nutzungsfall im Vordergrund stehen. Soll z. B. die Konfiguration der kompatiblen Verbindungen besonders schnell erfolgen, kann durch Auswahl von Hierarchieelementen aus eher höheren Hierarchieebenen eine große Auswahlmenge von Hierarchieelementen vorgegeben werden, aus der in Schritt (h) tendenziell mehr kompatible Verbindung automatisch erstellt werden können. Während dies zu einer schnellen Konfiguration führt, kann es sein, dass auf diese Weise kompatible Verbindungen entstehen, die nicht perfekt auf den vorliegenden Simulationsfall abgestimmt sind und die eventuell keine optimale Simulationsgeschwindigkeit erlauben. Demgegenüber können durch die Auswahl des ersten und des zweiten Hierarchieelements aus eher niedrigeren Hierarchieebenen eine bessere Anpassung der kompatiblen Verbindungen an den vorliegenden Simulationsfall und eventuell eine erhöhte Simulationsgeschwindigkeit und/oder eventuell eine erhöhte Messgenauigkeit erreicht werden.

Durch diesen Freiheitsgrad bezüglich der auswählbaren Hierarchieebene, der auf Seiten der Schnittstellen-Hierarchiestruktur und auf Seiten der Funktions-Hierarchiestruktur unterschiedlich genutzt werden kann, wird es dem Benutzer ermöglicht, durch sein Wissen über den vorliegenden Simulationsfall an manchen Stellen Priorität auf exakt gewünschte kompatible Verbindungen zu legen, während an anderen Stellen die eventuell vorhandenen Nachteile der automatisch erstellten Verbindungen gegenüber der verkürzten Konfigurationszeit in Kauf genommen werden. Auf diese Weise kann der Benutzer für einen gegebenen Simulationsfall das Verbinden der Eingabe/Ausgabe-Schnittstelle und der Eingabe/Ausgabe-Funktionen auf eine optimierte Weise bezüglich der relativen Wichtigkeit von Konfigurationsdauer und Erstellen bestimmter kompatibler Verbindungen vornehmen.

Dieser optimierte Kompromiss lässt sich am besten mit Blick auf andere Verbindungsverfahren veranschaulichen, die entweder eine voll automatische Verbindung der Gesamt-Hierarchiestrukturen oder eine individuelle Verbindung der Hierarchieelemente der untersten Hierarchieebene vorsehen. Bei der voll automatischen Verbindung der Schnittstellen-Hierarchiestruktur mit der Funktions-Hierarchiestruktur stößt der Benutzer einmal den Verbindungsprozess an, wonach eine Vielzahl von kompatiblen Verbindungen nach einem vorher definierten Algorithmus erstellt wird. Da es im Normalfall mehrere unterschiedliche Möglichkeiten gibt, kompatible Verbindungen zwischen der Schnittstellen-Hierarchiestruktur und der Funktions-Hierarchiestruktur zu erstellen, hängt das Ergebnis bei diesem Verbindungsverfahren maßgeblich von dem vorher definierten Verbindungsalgorithmus ab. Der Benutzer hat keinen Einfluss, welche konkreten Verbindungen, z.B. auf der untersten Hierarchieebene, erstellt werden.

Demgegenüber bietet die individuelle Verbindung der Hierarchieelemente der untersten Hierarchieebene dem Benutzer maximale Flexibilität und Konfigurationsfreiheit; er kann jede individuelle Verbindung selbst bestimmen. Allerdings ist dieses Verfahren zum Erstellen der Verbindungen höchst zeitaufwendig, weil keinerlei Automatisierung der Erstellung der Verbindungen vorgesehen ist. Gegenüber diesen beiden Verbindungsverfahren ermöglicht die vorliegende Erfindung einen vorteilhaften Kompromiss zwischen Dauer des Konfigurationsvorgangs und Erstellung der exakt gewünschten Verbindungen. Der Benutzer kann mit Hilfe seines Fachwissens den im Einzelfall besten Kompromiss durch das erfindungsgemäße Verfahren verwirklichen.

Der optimierte Kompromiss hat besonders großen Einfluss in Simulations-Szenarien, in denen mehrere Steuergeräte an das Testgerät angeschlossen sind und gleichzeitig getestet werden. Solche Szenarien treten insbesondere dann auf, wenn mehrere Steuergeräte gleichzeitig getestet werden sollen, wobei auch das korrekte Zusammenwirken der Steuergeräte getestet werden kann. In solchen Fällen sind besonders viele Verbindungen zu konfigurieren.

Im Folgenden werden einige Ausdrucksweisen des Anspruchs 1 näher erläutert:
Der Ausdruck, dass die Eingabe/Ausgabe-Schnittstelle zum Anschluss des zu testenden Steuergeräts oder zum Anschluss eines zu steuernden technischen Systems ausgebildet ist und dass das mit der Eingabe/Ausgabe-Schnittstelle zu verbindende Modell ein Modell des zu steuernden technischen Systems oder ein Modell des zu testenden Steuergeräts ist, impliziert zwei verschiedene Szenarien. Zum einen kann die Eingabe/Ausgabe-Schnittstelle zum Anschluss des zu testenden Steuergeräts ausgebildet sein, wobei dann das mit der Eingabe/Ausgabe-Schnittstelle zu verbindende Modell ein Modell des zu steuernden technischen Systems ist. Zum anderen kann die Eingabe/Ausgabe-Schnittstelle zum Anschluss eines zu steuernden technischen Systems ausgebildet sein, wobei dann das mit der Eingabe/Ausgabe-Schnittstelle zu verbindende Modell ein Modell des zu testenden Steuergeräts ist.

Der Begriff Testgerät beschreibt eine physisch vorhandene Einheit, d.h. ein gegenständliches Testgerät, wobei die Einheit eine physische Eingabe/Ausgabe-Schnittstelle, wie z.B. eine Anschluss-Leiste zum Verbinden verschiedener Kabel, hat. Dabei soll der Begriff Testgerät nicht implizieren, dass diese Einheit aus genau einem Element besteht. Im Gegenteil, das Testgerät kann aus mehreren Elementen, wie z.B. einem oder mehreren Anschluss-Modul(en) und einem oder mehreren Computer(n), der/die die Rechenkapazität zur Verfügung stellt/stellen, bestehen.

Die Eingabe/Ausgabe-Schnittstelle des Testgeräts ist hierarchisch organisiert. Zum Beispiel kann die Eingabe/Ausgabe-Schnittstelle folgendermaßen aufgebaut sein: Das Testgerät kann Halterungen zur Aufnahme von Anschlussstrukturen, auch als Racks bezeichnet, aufweisen. In jedem der Racks können eine oder mehrere Eingabe/Ausgabe-Einheiten, auch als I/O Units bezeichnet, vorhanden sein. In jeder der Eingabe/Ausgabe-Einheiten können eine oder mehrere Leiterplatten, auch als Boards bezeichnet, oder andere Anschluss-Module vorhanden sein. Jedes dieser Boards bzw. Module kann eine Mehrzahl von Kanalgruppen, auch als Channel Sets bezeichnet, aufweisen. Jede Kanalgruppe wiederum weist eine Mehrzahl von Kanälen, auch als Channels bezeichnet, auf. Die Racks, I/O Units, Boards bzw. Module, Channel Sets und Channels stellen beispielhafte Hierarchieebenen dar, wobei jedes einzelne Element der Schnittstellen-Hierarchiestruktur ein Hierarchieelement ist. Die genannte Aufteilung ist rein beispielhaft, d.h. es sind eine Vielzahl verschiedener Schnittstellen-Hierarchiestrukturen möglich.

Die Gesamtheit der Teile der physischen Anschlussstruktur wird als Eingabe/Ausgabe-Schnittstelle bezeichnet. Abstrakt kann man sich diese Eingabe/Ausgabe-Schnittstelle wie eine Baumstruktur aus verschiedenen Hierarchieelementen auf verschiedenen Hierarchieebenen vorstellen. In diesem Sinne ist die Schnittstellen-Hierarchiestruktur ein Abbild zumindest eines Teils der Eingabe/Ausgabe-Schnittstelle des Testgeräts. Die unterste Hierarchieebene der Schnittstellen-Hierarchiestruktur bilden die Kanäle, welche jeweils für die Übertragung eines Signals verantwortlich sind. Dabei kann eine physikalische Verbindung, wie z.B. eine Stecker-Buchse mit einem daran angeschlossenen Kabel, sowohl genau einen Kanal darstellen als auch mehrere Kanäle beinhalten, wenn die Signale in irgendeiner Form von Signal-Multiplex über die eine physikalische Verbindung übertragen werden. Es ist auch möglich, dass ein Kanal eine Mehrzahl von physikalischen Verbindungen benötigt, um ein bestimmtes Signal übertragen zu können. Die Gesamtheit der Eingabe/Ausgabe-Schnittstelle kann auch als die im Testgerät zur Verfügung stehenden Hardware-Ressourcen für die Anschlussfunktionalität bezeichnet werden. Somit ist die Eingabe/Ausgabe-Schnittstelle eine hierarchisch organisierte Gruppe von Hardware-Ressourcen.

Auch die Mehrzahl der Eingabe/Ausgabe-Funktionen ist hierarchisch aufgebaut, und ein Abbild dieser Eingabe/Ausgabe-Funktionen wird in dem erfindungsgemäßen Verfahren als Funktions-Hierarchiestruktur bereitgestellt. Dabei können die Eingabe/Ausgabe-Funktionen stark an Bausteine des in dem Testgerät vorhandenen Modells, d.h. an Bausteine des Modells des zu steuernden Systems bzw. des zu testenden Steuergeräts, angelehnt sein. Insbesondere ist es möglich, dass die Eingabe/Ausgabe-Funktionen Softwaretechnisch diejenigen Anschlüsse repräsentieren, die das zu steuernde technische System bzw. das zu testende Steuergerät, dessen Modell in dem Testgerät vorhanden ist, bei Hardware-mäßiger Ausgestaltung hätte. In dem Fall, dass das in dem Testgerät vorhandene Modell ein Modell eines zu steuernden technischen Systems ist, kann die Funktions-Hierarchiestruktur so aufgebaut sein, dass die Eingabe/Ausgabe-Funktionalität des Gesamtsystems in Funktionen der einzelnen Komponenten des Gesamtsystems unterteilt ist, welche wiederum in Funktionsblöcke aufgeteilt sein können, die wiederum Funktionsteile aufweisen können, wobei die Funktionsteile elektrische Schnittstellen repräsentieren. Es kann wiederum ein oder mehrere Funktions-Elemente auf der untersten Hierarchieebene geben, welche zum Beispiel Signalgruppen oder Kanalanforderungen, auch als Channel Requests bezeichnet, sein können. Auch diese Organisation der Eingabe/Ausgabe-Funktionen ist rein beispielhaft zu verstehen. Es sind eine Vielzahl anderer Funktions-Hierarchiestrukturen möglich.

Es wird explizit daraufhin gewiesen, dass der Begriff Funktion nicht im streng programmiertechnischen Sinne zu verstehen ist. Eine Eingabe/Ausgabe-Funktion kann auch ein Eingabe/Ausgabe-Programm bzw.-Teilprogramm bzw.-Unterprogramm sein, das sich wiederum hierarchisch untergliedern lässt.

In dem Testgerät kann genau ein Modell eines technischen Systems vorhanden sein. Es können auch mehrere Modelle von technischen Systemen vorhanden sein. Die Modelle können voneinander separiert sein oder untereinander verbunden sein. Es ist möglich, dass das Zusammenwirken verschiedener technischer Systeme an Hand von verbundenen Modellen simuliert wird. Das externe zu testende Steuergerät bzw. das externe zu steuernde technische System kann über die Eingabe/Ausgabe-Schnittstelle und die Eingabe/Ausgabe-Funktionen mit einem oder mit mehreren Modellen in dem Testgerät kommunizieren.

Die Kombination des Ermöglichens der Auswahl eines beliebigen ersten Hierarchieelements in Schritt (c) und des Isolierens der ersten Teilhierarchiestruktur auf Basis der Auswahl des ersten Hierarchieelements in Schritt (d) impliziert, dass das erfindungsgemäße Verfahren auch das Empfangen der Auswahl des ersten Hierarchieelements aufweist. In diesem Zusammenhang sei explizit erwähnt, dass das Verfahren vor dem Schritt (d) den weiteren Schritt des Empfangens der Auswahl des ersten Hierarchieelements aufweisen kann. Ebenso kann das Verfahren vor Schritt (f) den Schritt des Empfangens der Auswahl des zweiten Hierarchieelements aufweisen.

Die Ausdrucksweise, dass die Auswahl des zweiten Hierarchieelements nicht auf eine Hierarchieebene der zweiten Hierarchiestruktur beschränkt ist, die mit der Hierarchieebene des ersten Hierarchieelements korrespondiert, bedeutet, dass bei dem Ermöglichen der Auswahl des zweiten Hierarchieelements aus der zweiten Hierarchiestruktur sowohl die Auswahl aus der Hierarchieebene der zweiten Hierarchiestruktur, die mit der Hierarchieebene des ersten Hierarchieelements in der ersten Hierarchiestruktur korrespondiert, als auch aus anderen Hierarchieebenen als derjenigen Hierarchieebene, die mit der Hierarchieebene des ersten Hierarchieelements der ersten Hierarchiestruktur korrespondiert, ermöglicht wird. Dabei werden die korrespondierenden Hierarchieebenen durch ein Abzählen der Hierarchieebene entweder von oben nach unten oder von unten nach oben bestimmt. In anderen Worten, in Schritt (e) wird die Auswahl des zweiten Hierarchieelements frei von Restriktion bezüglich bestimmter Hierarchieebenen ermöglicht. Es ist möglich, dass in Schritt (e) die Auswahl eines zweiten Hierarchieelements aus der zweiten Hierarchiestruktur ermöglicht wird, wobei das zweite Hierarchieelement auf einer Hierarchieebene ist, die nicht mit der Hierarchieebene des ersten Hierarchieelements korrespondiert.

In der Diktion des vorliegenden Dokuments stellt die unterste Hierarchieebene die kleinste Hierarchieeinheit dar. In der Darstellung einer hierarchischen Baumstruktur wird die unterste Hierarchieebene in der Diktion des vorliegenden Dokuments durch die Blätter, auch als Leafs bezeichnet, gebildet. Auf der Schnittstellen-Seite bilden die Kanäle der Eingabe/Ausgabe-Schnittstelle die unterste Hierarchieebene. Auf der Funktions-Seite kann die unterste Hierarchieebene durch mit den Kanälen korrespondierende Elemente, wie z.B. Kanalanforderungen, sogenannte Channel Requests, gebildet werden. Allerdings sind hier auch andere Elemente auf der untersten Hierarchieebene möglich.

Die Schritte des Isolierens einer ersten Teilhierarchiestruktur und des Isolierens einer zweiten Teilhierarchiestruktur können auch zum Isolieren der gesamten Schnittstellen-Hierarchiestruktur oder Funktions-Hierarchiestruktur oder auch zum Isolieren eines einzelnen Hierarchieelements der untersten Hierarchieebene führen, je nach Auswahl des ersten und zweiten Hierarchieelements. Wenn z.B. das ausgewählte erste Hierarchieelement das oberste Hierarchieelement der Schnittstellen- oder Funktions-Hierarchiestruktur ist, dann wird die gesamte Schnittstellen- oder Funktions-Hierarchiestruktur isoliert. Wenn z.B. das erste Hierarchieelement ein Hierarchieelement der untersten Hierarchieebene der Schnittstellen- oder Funktions-Hierarchiestruktur ist, dann besteht die erste Teilhierarchiestruktur nur aus diesem einen Hierarchieelement. Wenn z.B. das erste Hierarchieelement ein Hierarchieelement einer mittleren Hierarchieebene ist, was in den meisten Anwendungs-Szenarien der häufigste Fall ist, dann besteht die erste Teilhierarchiestruktur aus einem Teil der ersten Hierarchiestruktur. Analog verhält es sich mit dem zweiten Hierarchieelement und der zweiten Teilhierarchiestruktur. Schritte (d) und (f) können demnach auch formuliert werden als Isolieren einer ersten/zweiten Teilhierarchiestruktur auf Basis der Auswahl des ersten/zweiten Hierarchieelements, wobei die erste/zweite Teilhierarchiestruktur das erste/zweite Hierarchieelement und, soweit vorhanden, die von dem ersten/zweiten Hierarchieelement abwärts gelegenen Hierarchieelemente umfasst.

Das Bestimmen von kompatiblen Verbindungen zwischen Hierarchieelementen der ersten Teilhierarchiestruktur und Hierarchieelementen der zweiten Teilhierarchiestruktur bedeutet, dass überprüft wird, ob ein bestimmtes Hierarchieelement der ersten Teilhierarchiestruktur, gegebenenfalls unter Mitwirkung der darunter liegenden Hierarchieelemente, mit einem Hierarchieelement der zweiten Teilhierarchiestruktur, gegebenenfalls unter Mitwirkung der darunter liegenden Hierarchieelemente, kommunizieren kann. In anderen Worten, es wird geprüft, ob eine Eingabe/Ausgabe-Funktion, definiert durch ein Hierarchieelement auf einer bestimmten Hierarchieebene, einen Teil der Eingabe/Ausgabe-Schnittstelle, ebenfalls definiert durch ein bestimmtes Hierarchieelement, ansteuern kann, d.h. Signale auf den Teil der Eingabe/Ausgabe-Schnittstelle legen kann, bzw. Signale von dem bestimmten Teil der Eingabe/Ausgabe-Schnittstelle empfangen kann.

Jedes Hierarchieelement zeichnet sich durch eine oder mehrere Eigenschaften aus. In anderen Worten, jedes Hierarchieelement hat bestimmte Charakteristika. Auf Seiten der Eingabe/Ausgabe-Schnittstelle können die Hierarchieelemente beschreibende Eigenschaften haben, die die Hardware beschreiben. Auf Seiten der Eingabe/Ausgabe-Funktionen können die Hierarchieelemente fordernde Eigenschaften haben, die die Anforderungen beschreiben, welche auf Seiten des Eingabe/Ausgabe-Schnittstelle erfüllt sein müssen, damit eine Zuweisung zu einem Hierarchieelement der Eingabe/Ausgabe-Schnittstelle möglich ist. Für die Prüfung der Kompatibilität von Hierarchieelementen können die Charakteristika der Hierarchieelemente der Eingabe/Ausgabe-Funktionen mit den Charakteristika der Hierarchieelemente der Eingabe/Ausgabe-Schnittstelle verglichen und auf Kompatibilität geprüft werden. In einem simplen Beispiel wird geprüft, ob eine Eingabe/Ausgabe-Funktion auf der gewählten Hierarchieebene imstande ist, ein Gleichstrom-Signal oder ein Wechselstrom-Signal auszuwerten, und es wird geprüft, ob es sich bei dem gewählten Hierarchieelemente der Eingabe/Ausgabe-Schnittstelle um einen Wechselstrom-Anschluss oder einen Gleichstrom-Anschluss handelt. Ein weiteres einfaches Beispiel betrifft die Kommunikationsrichtung. Ein Messkanal kann nur mit einer Messfunktion verbunden werden. Weiterhin ist es möglich, dass es Kanäle gibt, die sowohl einen Strom als auch eine Spannung messen, während andere Kanäle nur eine der beiden Größen verwerten können. Die Prüfung kann sowohl den Vergleich solch elementarer Charakteristika als auch andere Vergleiche, wie z.B. Schnelligkeit des Anschlusses und Auslesefrequenz der Eingabe/Ausgabe-Funktion oder Ähnliches, enthalten. Es ist möglich, dass ein Kanal nur den Zustand eines Signals messen kann, z.B. einen Spannungswert, oder dass ein Kanal das zu messende Signal verarbeiten kann, z.B. eine Zeit zwischen zwei Signalflanken messen kann. Die vorstehend genannten Eigenschaften der Kanäle und anderer Hierarchieelemente sind rein beispielhaft. Die Hierarchieelemente können eine Vielzahl verschiedener Arten von Eigenschaften bzw. Charakteristika haben.

Das Bestimmen der kompatiblen Verbindungen kann einen, muss aber keinen vollständigen Vergleich aller Hierarchieelemente der ersten Teilhierarchiestruktur mit allen Hierarchieelementen der zweiten Teilhierarchiestruktur umfassen. Es ist auch möglich, dass nur Hierarchieelemente gleicher Hierarchieebenen auf Kompatibilität geprüft werden. In einem speziellen Fall ist es möglich, dass lediglich die Kompatibilität der Hierarchieelemente der untersten Hierarchieebene der ersten Teilhierarchiestruktur und der Hierarchieelemente der untersten Hierarchieebene der zweiten Teilhierarchiestruktur bestimmt wird. Auf dieser untersten Ebene lassen sich die Charakteristika der Hierarchieelemente besonders einfach auf Kompatibilität vergleichen, da es weder möglich noch nötig ist, darunter liegende Hierarchieelemente in irgendeiner Form zu berücksichtigen.

Das automatische Konfigurieren von zumindest einem Teil der kompatiblen Verbindungen, die festgestellt worden sind, ermöglicht letztendlich die Kommunikation zwischen dem in dem Testgerät vorhandenen Modell und dem zu testenden Steuergerät bzw. dem steuernden technischen System, welches an das Testgerät angeschlossen ist. Der Begriff des Konfigurierens kann dabei lediglich das Erstellen einer Software-mäßigen Verbindung zwischen dem Abbild der Eingabe/Ausgabe-Schnittstelle und der passenden Eingabe/Ausgabe-Funktion umfassen. Es ist aber auch möglich, dass der Schritt des Konfigurierens weitere Charakteristika dieser Verbindung festlegt. Der Schritt des Konfigurierens der kompatiblen Verbindung sorgt in jedem Fall dafür, dass zwischen den Hierarchieelementen eine derartige Assoziation besteht, dass das Modell des Testgeräts während der nach der Konfiguration auszuführenden Simulation auf die Eingabe/Ausgabe-Schnittstelle über die kompatiblen Verbindungen zugreifen kann. In anderen Worten, die Kommunikationsfunktionalität über die Eingabe/Ausgabe-Schnittstelle ist konfiguriert. In wiederum anderen Worten, das Testgerät ist bezüglich der Kommunikationskapazität zwischen dem Modell und der Eingabe/Ausgabe-Schnittstelle konfiguriert.

Es ist möglich, dass zwischen der ersten und der zweiten Teilhierarchiestruktur eine Vielzahl von kompatiblen Verbindungen möglich sind, die sich teilweise gegenseitig ausschließen, z.B. weil sie die gleichen Hierarchieelemente beinhalten. Das Verfahren kann in so einem Fall in Schritt (h) die kompatiblen Verbindungen, die automatisch konfiguriert werden, nach dem Zufallsprinzip oder nach anderen Entscheidungskriterien, wie zum Beispiel gemäß einer Rangfolge der Kanäle, auswählen. In anderen Worten: Schritt (h) kann den Schritt des Auswählens jeweils einer kompatiblen Verbindung von sich gegenseitig ausschließenden kompatiblen Verbindungen aufweisen.

Der Schritt des automatischen Konfigurierens kann sich auf kompatible Verbindungen jeglicher Hierarchieebene beziehen. In anderen Worten, die in Schritt (h) erstellten kompatiblen Verbindungen können auf jeder Hierarchieebene sein. Insbesondere können in Schritt (h) zumindest ein Teil der kompatiblen Verbindungen zwischen den Hierarchieelementen der untersten Hierarchieebene der ersten Teilhierarchiestruktur und den Hierarchieelementen der untersten Hierarchieebene der zweiten Teilhierarchiestruktur automatisch konfiguriert werden.

Es wird betont, dass die Bezeichnung der Verfahrensschritte mit den Buchstaben (a) bis (h) keine Reihenfolge impliziert. Vielmehr können die Verfahrensschritte in jeder beliebigen Reihenfolge ausgeführt werden, solange Verfahrensschritte, die auf Ergebnisse anderer Verfahrensschritte zurückgreifen, nach diesen ausgeführt werden. Die Reihenfolge der Verfahrensschritte gemäß der Abfolge der Buchstaben (a) bis (h) stellt allerdings eine mögliche und auch zweckmäßige Reihenfolge der Verfahrensschritte dar.

Gemäß einer weiteren Ausführungsform wird in Schritt (c) einem Benutzer die Auswahl eines beliebigen ersten Hierarchieelements aus der ersten Hierarchiestruktur ermöglicht und/oder wird in Schritt (e) dem Benutzer die Auswahl des zweiten Hierarchieelements aus der zweiten Hierarchiestruktur ermöglicht. Es ist auch möglich, dass in Schritt (c) und/oder in Schritt (e) die Auswahl durch ein maschinen-gestütztes Verfahren, wie z.B. durch ein Konfigurations-Programm oder -Skript, ermöglicht wird.

Gemäß einer weiteren Ausführungsform ist Schritt (h) dadurch gekennzeichnet, dass alle kompatiblen Verbindungen automatisch konfiguriert werden. In anderen Worten, nach der Bestimmung der möglichen kompatiblen Verbindungen wird eine maximal mögliche Anzahl von kompatiblen Verbindungen konfiguriert. Dies hat für den Benutzer den Vorteil, dass sichergestellt ist, dass durch die Auswahl des ersten Hierarchieelements in der ersten Hierarchiestruktur und des zweiten Hierarchieelements in der zweiten Hierarchiestruktur die maximal mögliche Anzahl von kompatiblen Verbindungen zwischen den Teilhierarchiestrukturen konfiguriert wird. Wenn der Benutzer es für diese Verbindungen als nicht notwendig erachtet, muss er sich bezüglich der ersten und der zweiten Teilhierarchiestruktur nicht um die unterste Hierarchieebene kümmern. Er kann sich aber trotzdem darauf verlassen, dass die spätere Simulation auf die für einen bestimmten Teilaspekt der Simulation nötigen Verbindungen zurückgreifen kann.

Gemäß einer weiteren Ausführungsform weist Schritt (h) auf: Automatischen Konfigurieren von Verbindungen höherer Ebene, wodurch Hierarchieelemente der ersten Teilhierarchiestruktur, die sich oberhalb der untersten Hierarchieebene befinden, und kompatible Hierarchieelemente der zweiten Teilhierarchiestruktur, die sich oberhalb der untersten Hierarchieebene befinden, verbunden werden. Auf diese Weise wird eine Kommunikationsverbindung zwischen dem Modell und der Eingabe/Ausgabe-Schnittstelle auf einer hierarchisch oberhalb der untersten Hierarchieebene gelegenen Ebene erstellt. Dadurch wird die Kommunikation einzelner Funktionsblöcke, die über die unterste Ebene hinausreichen, gemeinsam konfiguriert.

Gemäß einer weiteren Ausführungsform werden für das automatische Konfigurieren von Verbindungen höherer Ebene zusätzlich Hierarchieelemente, die sich außerhalb der ersten Teilhierarchiestruktur oberhalb des ersten Hierarchieelements befinden, und/oder Hierarchieelemente, die sich außerhalb der zweiten Teilhierarchiestruktur oberhalb des zweiten Hierarchieelements befinden, berücksichtigt. Auf diese Weise erstreckt sich die Konfiguration kompatibler Verbindungen über die erste Teilhierarchiestruktur und die zweite Teilhierarchiestruktur nach oben hinaus, wodurch ohne signifikanten Mehraufwand eine umfassendere Konfiguration über mehrere Hierarchieebenen hinweg stattfinden kann.

Gemäß einer weiteren Ausführungsform sind zumindest ein Teil der Hierarchieelemente der Schnittstellen-Hierarchiestruktur und zumindest ein Teil der Hierarchieelemente der Funktions-Hierarchiestruktur, insbesondere zumindest ein Teil der Kanäle und zumindest ein Teil der Hierarchieelemente der untersten Hierarchieebene der Funktions-Hierarchiestruktur, durch Attribute charakterisiert, und das Bestimmen von kompatiblen Verbindungen in Schritt (g) erfolgt abhängig von der Kompatibilität der Attribute. Attribute sind ein Mittel, durch das sich die Charakteristika der Hierarchieelemente bequem festlegen lassen. Weiterhin sind Attribute gut maschinell vergleichbar, so dass eine schnelle Prüfung auf Kompatibilität der einzelnen Hierarchieelemente möglich ist.

Gemäß einer weiteren Ausführungsform enthalten die kompatiblen Verbindungen eine Mehrzahl von gleichartigen Verbindungen, wobei gleichartige Verbindungen zwischen Kanälen und Hierarchieelementen der untersten Hierarchieebene der Funktions-Hierarchiestruktur mit jeweils gleichen Attributen bestehen, wobei die Kombination der gleichartigen Verbindungen eine kompatible Sammelverbindung bildet. In anderen Worten, gleichartige Verbindungen liegen vor, wenn mehrere Hierarchieelemente mit gleichen Attributen in der Schnittstellen-Hierarchiestruktur mit mehreren Hierarchieelementen mit gleichen Attributen in der Funktions-Hierarchiestruktur verbunden sind. Die Gesamtheit dieser gleichartigen Verbindungen stellt eine kompatible Sammelverbindung dar. Ein Anwendungsfall für eine solche kompatible Sammelverbindung ist beispielsweise der Folgende: zwischen dem Steuergerät und dem Testgerät soll ein Stromsignal mit bis zu 10A Stromstärke vorhanden sein. Die Eingabe/Ausgabe-Schnittstelle verfügt allerdings nur über Anschlüsse, die bis zu 4A Stromstärke unterstützen. In diesem Fall können drei gleichartige Verbindungen zwischen solchen Anschlüssen und entsprechenden Hierarchieelementen der Funktions-Hierarchiestruktur erstellt werden, die in ihren Attributen eine Anschluss-Ansteuerung von 4A ermöglichen. Die Kombination dieser drei gleichartigen Verbindungen sorgt dann für eine kompatible Sammelverbindung, so dass der gewünschte Signalaustausch möglich wird.

Gemäß einer weiten Ausführungsform wird für den Fall, dass in Schritt (g) festgestellt wird, dass es innerhalb der ersten und zweiten Teilhierarchiestruktur mehr Kanäle als Hierarchieelemente der untersten Hierarchieebene auf Seiten der Funktions-Hierarchiestruktur gibt, im Schritt (h) folgender Schritt zusätzlich ausgeführt: (h') Erzeugen zusätzlicher Hierarchieelemente der untersten Hierarchieebene auf Seiten der Funktions-Hierarchiestruktur und automatisches Konfigurieren von zusätzlichen kompatiblen Verbindungen unter Verwendung der erzeugten zusätzlichen Hierarchieelemente. Da die Eingabe/Ausgabe-Funktionen in Software vorliegen und demnach nicht statisch sind, sondern dynamisch verändert werden können, kann durch Schritt (h') die Anzahl der kompatiblen Verbindungen erhöht werden, wodurch eine möglichst große Anzahl der Hierarchieelemente in der Teilhierarchiestruktur auf Seiten der Schnittstellen-Hierarchiestruktur verwendet wird und somit für die Kommunikation des Modells zur Verfügung steht. Es kann z.B. sein, dass auf Seiten der Schnittstellen-Teilhierarchiestruktur zwei Anschlüsse mit Signalen von bis zu 5A Stromstärke vorhanden sind, während in der Funktions-Teilhierachiestruktur nur ein Hierarchieelement vorhanden ist, das die Kommunikation mit einem solchen Anschluss unterstützt. In so einem Fall kann das Verfahren in der Funktions-Teilhierarchiesturktur weitere solcher Hierarchieelemente erzeugen, um für die vorhandenen Anschlüsse in der Schnittstellen-Teilhierarchiestruktur kompatible Hierarchieelemente bereitzustellen.

Gemäß einer weiteren Ausführungsform ermöglicht Schritt (e) die Auswahl eines beliebigen zweiten Hierarchieelements aus der zweiten Hierarchiestruktur. In diesem Fall ermöglicht das Verfahren somit sowohl die Auswahl eines beliebigen ersten Hierarchieelements in der ersten Hierarchiestruktur als auch die Auswahl eines beliebigen zweiten Hierarchieelements in der zweiten Hierarchiestruktur. Auf diese Weise wird dem Benutzer ermöglicht, vollkommen frei Hierarchieelemente auf mögliche Verbindungen und Konfigurationen von dem Verfahren testen zu lassen. Allerdings ist es in diesem Fall möglich, das dann in Schritt (h) keine Verbindungen automatisch konfiguriert werden, weil in Schritt (g) festgestellt wurde, dass es in den zwei durch die Auswahl festgelegten Teilhierarchiestrukturen keine kompatiblen Verbindungen gibt.

Gemäß einer alternativen Ausführungsform weist das Verfahren den folgenden Schritt (k) auf, welcher vor dem Schritt (e) ausgeführt wird. Schritt (k) umfasst, für jedes der Hierarchieelemente zumindest eines Teils der zweiten Hierarchiestruktur, ein Isolieren einer jeweiligen Teilhierarchiestruktur, die das jeweilige Hierarchieelement und von dem jeweiligen Hierarchieelement abwärts gelegene Hierarchieelemente umfasst, und ein Prüfen, ob sich in der jeweiligen Teilhierarchiestruktur mindestens ein Hierarchieelement befindet, für das eine kompatible Verbindung mit einem Hierarchieelement der ersten Teilhierarchiestruktur möglich ist. Wiederum ist es möglich, dass in Schritt (k) das Vorliegen möglicher kompatibler Verbindungen auf der untersten Hierarchieebene und/oder auf höheren Hierarchieebenen geprüft wird. Durch die Ausführung von Schritt (k) wird in Schritt (e) nur eine Auswahl solcher Hierarchieelemente ermöglicht, für deren Teilhierarchiestruktur in Schritt (k) eine kompatible Verbindung festgestellt wurde. Auf diese Weise wird durch das Verfahren für den Benutzer eine Vorauswahl getroffen, welche Hierarchieelemente auf Seiten der zweiten Hierarchiestruktur überhaupt zu kompatiblen Verbindungen führen können. Dies wiederum lässt einen effizienteren Verbindungsvorgang zwischen der Eingabe/Ausgabe-Schnittstelle und den Eingabe/Ausgabe-Funktionen zu. Die Tatsache, dass nur bestimmte Hierarchieelemente zur Auswahl zur Verfügung stehen, kann dem Benutzer optisch angezeigt werden, z.B. durch farbliche Markierungen, Veränderungen des Cursors oder Ähnliches, wenn er auf dem Bildschirm das zweite Hierarchieelement auswählen will.

Gemäß einer weiteren Ausführungsform werden mindestens die Schritte (c) bis (h) in mehreren Durchläufen ausgeführt, wobei kompatible Verbindungen aus einem früheren Durchlauf für einen späteren Durchlauf nicht mehr zur Verfügung stehen. Es ist generell möglich, dass ein Hierarchieelement nicht mehr Teil weiterer Verbindungen sein kann, sobald dieses Hierarchieelement für eine früher erstellte Verbindung aufgebraucht worden ist. Dies kann auf alle Hierarchieelemente zutreffen, aber auch nur auf einen Teil der Hierarchieelemente. Es ist z.B. möglich, dass die Hierarchieelemente der untersten Hierarchieebene nur für jeweils eine kompatible Verbindung zur Verfügung stehen, während die Hierarchieelemente höherer Ebenen Teil von einer oder mehreren kompatiblen Verbindungen sein können. Auf diese Weise wird dem Benutzer in iterativen Schritten ermöglicht, die gesamte Verbindung zwischen der Eingabe/Ausgabe-Schnittstelle und den Eingabe/Ausgabe-Funktionen zu konfigurieren, wobei eine klare Zuordnung zwischen Hierarchieelementen aus den beiden Hierarchiestrukturen gewahrt bleibt. Auf diese Weise ist bei der iterativen Konfiguration der kompatiblen Verbindungen sichergestellt, dass die resultierenden Verbindungen eine Kommunikation zwischen Modell und Eingabe/Ausgabe-Schnittstelle mit konsistenten Daten zulassen.

Gemäß einer weiteren Ausführungsform werden mindestens die Schritte (c) bis (h) in mehreren Durchläufen ausgeführt, wobei abhängig von der Auswahl des ersten und des zweiten Hierarchieelements Schritt (h) mindestens einmal die folgenden Schritte aufweist: Löschen von mindestens einer alten, in einem früheren Durchlauf konfigurierten kompatiblen Verbindung und Konfigurieren von mindestens einer neuen kompatiblen Verbindung, wobei mindestens ein Hierarchieelement der alten kompatiblen Verbindung für eine neue kompatible Verbindung verwendet wird. Auch auf diese Weise wird sichergestellt, dass es nur eindeutige Verbindungen zwischen Hierarchieelementen der ersten Hierarchiestruktur und Hierarchieelementen der zweiten Hierarchiestruktur gibt. Allerdings ermöglicht dieses Merkmal dem Benutzer, beim iterativen Konfigurieren der Verbindungen Hierarchieelemente aus der Schnittstellen-Hierarchiestruktur und der Funktions-Hierarchiestruktur frei auszuwählen, wobei das Verfahren einer solchen neuen Auswahl Priorität über eine alte Auswahl gibt und alte Verbindungen durch neue ersetzt, wenn diese durch die neue Auswahl gewünscht sind. Wiederum ist es möglich, dass die Hierarchieelemente nur Teil einer kompatiblen Verbindung sein können oder dass bestimmte Hierarchieelemente auch Teil mehrerer kompatibler Verbindungen sein können.

Es ist auch möglich, dass das Verfahren anhand eines Entscheidungskriteriums bestimmt, ob bei iterativer Durchführung des Verfahrens und bei einer entsprechenden neuen Auswahl, die in Konflikt mit einer bestehenden alten kompatiblen Verbindung steht, die alten kompatiblen Verbindungen bestehen bleiben, wie oben beschrieben, oder gelöscht werden und die Hierarchieelemente für neue kompatible Verbindungen freigegeben werden.

Gemäß einer weiteren Ausführungsform ist das Testgerät ein Hardware-in-the-loop Simulator. Es ist auch möglich, dass das Testgerät ein Rapid Control Prototyping Testgerät ist.

Gemäß einer weiteren Ausführungsform ist das in dem Testgerät vorhandene Modell ein Software-Modell des zu steuernden technischen Systems bzw. des zu testenden Steuergeräts. Dementsprechend sind die Eingabe/Ausgabe-Funktionen Software-basierte Funktionen.

Gemäß einer weiteren Ausführungsform enthalten die Schritte (c) und (e) das Präsentieren der ersten Hierarchiestruktur und der zweiten Hierarchiestruktur auf einer graphischen Benutzeroberfläche eines Rechnergeräts, wie z.B. eines Computers, eines Tablets oder eines Mobilfunkgeräts. So wird dem Benutzer graphisch die Auswahl des ersten Hierarchieelements und die Auswahl des zweiten Hierarchieelements ermöglicht. Die Auswahl des ersten und zweiten Hierarchieelements kann dem Benutzer auch durch ein sogenanntes Dragand-Drop-Verfahren ermöglicht werden, wobei es dem Benutzer ermöglicht wird, das beliebig ausgewählte erste Hierarchieelement aus der ersten Hierarchiestruktur graphisch auf ein zweites Hierarchieelement in der zweiten Hierarchiestruktur zu ziehen.

Beispielhafte Ausführungsformen der Erfindung umfassen weiterhin ein Verfahren zum Testen eines Steuergeräts mit einem für das Testen des Steuergeräts eingerichteten Testgerät, wobei das Verfahren die folgenden Schritte aufweist: Ausführen des Verfahrens zum Verbinden der Eingabe/Ausgabe-Schnittstelle des Testgeräts nach einer der vorstehend beschriebenen Ausführungsformen, und Ausführen einer Simulation, bei der das in dem Testgerät vorhandene Modell mit dem zu testenden Steuergerät bzw. dem zu steuernden technischen System über die kompatiblen Verbindungen kommuniziert, die in Schritt (h) des Verfahrens automatisch konfiguriert worden sind.

Beispielhafte Ausführungsformen der Erfindung umfassen weiterhin ein Computerprogrammprodukt sowie Computerprogramm zur Ausführung eines Verfahrens zum Verbinden der Eingabe/Ausgabe-Schnittstelle des Testgeräts, das so ausgebildet ist, dass ein Verfahren gemäß einer der vorstehend beschriebenen Ausführungsformen ausführbar ist.

Beispielhafte Ausführungsformen der Erfindung umfassen weiterhin ein Testgerät, das für das Testen eines Steuergeräts eingerichtet ist, eine Eingabe/Ausgabe-Schnittstelle zum Anschluss des zu testenden Steuergeräts oder zum Anschluss eines zu steuernden technischen Systems aufweist und ein Modell des zu steuernden technischen Systems oder des zu testenden Steuergeräts sowie eine Mehrzahl von mit dem Modell verbundenen Eingabe/Ausgabe-Funktionen aufweist, wobei das Testgerät eingerichtet ist, ein Verfahren gemäß gemäß einer der vorstehend beschriebenen Ausführungsformen auszuführen.

Beispielhafte Ausführungsformen der Erfindung umfassen weiterhin eine Kombination eines Testgeräts und eines damit verbundenen, externen Rechner-Geräts, wie z.B. eines Computers, Tablets oder Mobilfunkgeräts, wobei das Testgerät für das Testen eines Steuergeräts eingerichtet ist, eine Eingabe/Ausgabe-Schnittstelle zum Anschluss des zu testenden Steuergeräts oder zum Anschluss eines zu steuernden technischen Systems aufweist und ein Modell des zu steuernden technischen Systems oder des zu testenden Steuergeräts sowie eine Mehrzahl von mit dem Modell verbundenen Eingabe/Ausgabe-Funktionen aufweist, und wobei das externe Rechner-Gerät eingerichtet ist, ein Verfahren gemäß einer der vorstehend beschriebenen Ausführungsformen auszuführen.

Weitere beispielhafte Ausführungsformen werden im Folgenden mit Bezug auf die beiliegenden Figuren beschrieben.
Fig. 1 zeigt ein Blockdiagramm eines beispielhaften Testgeräts, das an ein beispielhaftes, zu testendes Steuergerät angeschlossen ist.
Fig. 2 zeigt beispielhafte Hierarchiestrukturen für beispielhafte Eingabe/Ausgabe-Schnittstellen und für beispielhafte Eingabe/Ausgabe-Funktionen.
Fig. 3-6 zeigen verschiedene beispielhafte Durchführungen des Verfahrens zum Verbinden der Eingabe/Ausgabe-Schnittstelle an Hand der jeweiligen Schnittstellen- und Funktions-Hierarchiestrukturen.

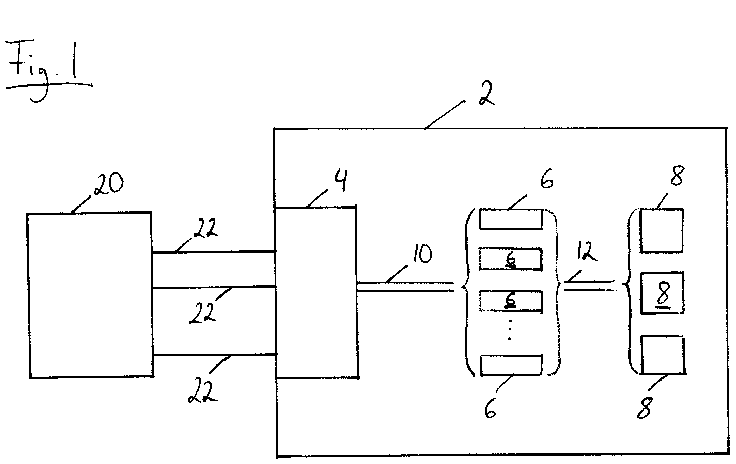

In Fig. 1 ist ein beispielhaftes Testgerät 2 nach einer Ausführungsform der Erfindung in einem Blockdiagramm dargestellt. Auf dem Testgerät 2 kann eine Ausführungsform des erfindungsgemäßen Verfahrens zum Verbinden einer Eingabe/Ausgabe-Schnittstelle 4 des Testgeräts 2 mit einem in dem Testgerät 2 vorhandenen Modell 8 eines technischen Systems ausgeführt werden.

In der beispielhaften Ausführungsform von Fig. 1 weist das Testgerät 2 eine Eingabe/Ausgabe-Schnittstelle 4, eine Mehrzahl von Eingabe/Ausgabe-Funktionen 6 und drei Modelle 8 von technischen Systemen auf. Die Eingabe/Ausgabe-Schnittstelle 4 und die Eingabe/Ausgabe-Funktionen 6 des Testgeräts 2 sind durch kompatible Verbindungen 10 gekoppelt. Die Erstellung dieser kompatiblen Verbindungen 10 ist Gegenstand des erfindungsgemäßen Verfahrens, wie unten detailliert ausgeführt wird. Die Eingabe/Ausgabe-Funktionen 6 und die Modelle 8 sind durch Verbindungen 12 gekoppelt. Das beispielhafte Testgerät 2 weist eine Vielzahl von Eingabe/Ausgabe-Funktionen 6 auf, von denen in Fig. 1 nur vier zur Veranschaulichung dargestellt sind. Weiterhin kann das Testgerät 2 eine beliebige Anzahl von Modellen 8 von technischen Systemen haben. Z.B. kann nur ein Modell 8 vorhanden sein. Es ist auch möglich, dass mehrere Modelle vorhanden sind, wobei die Anzahle der Modelle kleiner oder größer als die gezeigten drei Modelle 8 sein kann. Die Modelle 8 können untereinander verbunden sein, so dass sie miteinander kommunizieren können.

In der beispielhaften Ausführungsform von Fig. 1 ist ein Modell 8 ein Modell eines zu steuernden technischen Systems. Z.B. kann ein Modell 8 ein Modell eines von einem Steuergerät zu steuernden Motors eines Kraftfahrzeugs sein. Generell kann jedes Modell 8 ein Modell eines beliebigen technischen Systems sein, das im Betrieb von einem Steuergerät gesteuert wird und dessen Steuergerät mit dem Testgerät 2 getestet werden soll. Es ist auch möglich, dass ein oder mehrere Modelle 8 Modelle von nicht gesteuerten technischen Systemen sind, die aber mit dem zu steuernden technischen System interagieren und deren Reaktionen auf die Steuerung mit beobachtet werden sollen. Auch kann ein Modell 8 ein Modell eines technischen Systems sein, das von dem Steuergerät nicht direkt gesteuert wird, das aber an das Steuergerät Daten, z.B. Sensordaten, liefert und so Teil der Steuerung ist. In anderen Worten, der Begriff der Kommunikation zwischen dem Modell und dem externen Steuergerät impliziert nicht notwendigerweise, dass ein bidirektionaler Signalfluss mit einem bestimmten Modell erfolgt. Die Signalflüsse können auch auf verschiedene Modelle aufgeteilt sein.

Das Testgerät 2 ist in dem Testaufbau von Fig. 1 mit einem Steuergerät 20 verbunden. Das Steuergerät 20 kann z.B. ein Prototyp des Steuergeräts sein, mit dem nach Abschluss der Entwicklung das zu steuernde technische System im Betrieb gesteuert werden soll. Wenn das Modell 8 ein Modell eines Motors ist, ist das Steuergerät 20 ein zu testendes Motor-Steuergerät. Das Steuergerät 20 ist über mehrere Kabel 22 mit dem Testgerät 2 verbunden. Die Kabel 22 können die gleiche Auslegung haben wie die Kabel, die im späteren Betrieb zur Verbindung des Steuergeräts mit dem zu steuernden technischen Systems verwendet werden. Es kann sich aber auch um speziell für den Test ausgelegte Kabel handeln. Die Kabel 22 ermöglichen den Austausch von Signalen zwischen dem Testgerät 2 und dem Steuergerät 20. Es können auch mehrere Steuergeräte vorhanden sein, die gleichzeitig an das Testgerät 2 angeschlossen sind. Mehrere Steuergeräte können parallel ohne Einfluss aufeinander getestet werden. Es ist aber auch möglich, dass gerade der Einfluss der Steuergeräte aufeinander über das Modell des zu steuernden technischen Systems getestet werden soll.

Das Steuergerät 20 ist Hardware-mäßig implementiert, d.h. das Steuergerät 20 ist ein physisches Gerät, das mit Kabeln 22 mit dem physischen Testgerät 2 verbunden wird. Durch diesen Aufbau kann das Steuergerät als Hardware-Einheit getestet werden. Man spricht deshalb davon, dass das Testgerät 2 ein Hardware-in-the-Loop-Simulator (HIL-Simulator) ist. Das Steuergerät 20 kann mit dem Testgerät 2 einer Echtzeit-Simulation unterzogen werden. Die Tatsache, dass das Steuergerät 20 Hardware-mäßig implementiert ist, sagt nichts über den inneren Aufbau des Steuergeräts 20 aus. Der in dem Steuergerät 20 verwirklichte Steuer- bzw. Regelungsalgorithmus kann auch durch eine Software implementiert sein, die auf einem Prozessor läuft.

Das Modell 8 bzw. die Modelle 8 und die Eingabe/Ausgabe-Funktionen 6 sind ein Software-Modell bzw. Software-Modelle und damit verbundene Software-Eingabe/Ausgabe-Funktionen. Auch die Verbindungen 12 sind Software-Verbindungen. Demgegenüber besteht die Eingabe/Ausgabe-Schnittstelle 4 aus Hardware-Ressourcen, die den Anschluss der Kabel 22 erlauben. Die Eingabe/Ausgabe-Funktionen 6 stellen den Eingang bzw. Ausgang der über die Kabel 22 ausgetauschten Signale in das Modell 8 bzw. die Modelle 8 dar. In anderen Worten, das Modell 8 bzw. die Modelle 8 kommuniziert/kommunizieren über die Eingabe/Ausgabe-Funktionen 6, über die kompatiblen Verbindungen 10, über die Eingabe/Ausgabe-Schnittstelle 4 und über die Kabel 22 mit dem Steuergerät 20.

Die Funktionalität des Steuergeräts 20 kann an Hand dieser Kommunikation mit einem Modell 8 bzw. mit mehreren Modellen 8 getestet bzw. verifiziert werden. Dazu werden im Normalfall verschiedene Simulationen auf dem Testgerät 2 durchgeführt und die Reaktionen des Steuergeräts beobachtet und bewertet. Es wird ausgewertet, ob sich das Steuergerät wie gewünscht verhält und das Modell 8 des zu steuernden technischen Systems wie gewünscht steuert.

Es ist auch möglich, dass ein Modell 8 ein Modell eines Steuergeräts ist und dass ein zu steuerndes technisches System über die Kabel 22 an das Testgerät 2 angeschlossen ist. So kann eine Software-Implementierung eines Steuergeräts getestet werden, was vor allem zu einem frühen Zeitpunkt in der Steuergeräte-Entwicklung zweckmäßig ist. In diesem Fall ist das Testgerät 2 ein Rapid Control Proptotyping (RCP) Testgerät. Das zu steuernde technische System kann bei RCP jegliches zu steuernde technische System sein, auch ein vorhandenes Steuergerät, das wiederum an ein zu steuerndes technischen System angeschlossen sein kann und an dem mit Hilfe des Testgeräts 2 neue bzw. zusätzliche Steuer-Funktionalität getestet werden kann.

Unabhängig davon, ob es sich bei dem Testgerät 2 um einen HIL-Simulator oder um ein RCP-Testgerät handelt, werden bei der Konfiguration des Testgeräts 2 für einen bestimmten Test die kompatiblen Verbindungen 10 erstellt. Dabei werden im Einzelfall je nach vorhandenem Modell 8 bzw. vorhandenen Modellen 8, je nach externem Steuergerät 20 (bzw. externem zu steuernden technischen System) und je nach gewünschtem Simulationsablauf unterschiedliche Verbindungen zwischen der Eingabe/Ausgabe-Schnittstelle 4 und den Eingabe/Ausgabe-Funktionen 6 benötigt.

In dem Blockdiagramm von Fig. 1 sind die Eingabe/Ausgabe-Schnittstelle 4 und die Eingabe/Ausgabe-Funktionen 6 als Blöcke dargestellt. Die Eingabe/Ausgabe-Schnittstelle 4 und die Eingabe/Ausgabe-Funktionen 6 haben aber jeweils eine hierarchische Struktur. Diese hierarchische Struktur kann viele verschiedene Ausführungsformen haben und kann auf viele verschiedene Weisen dargestellt werden.

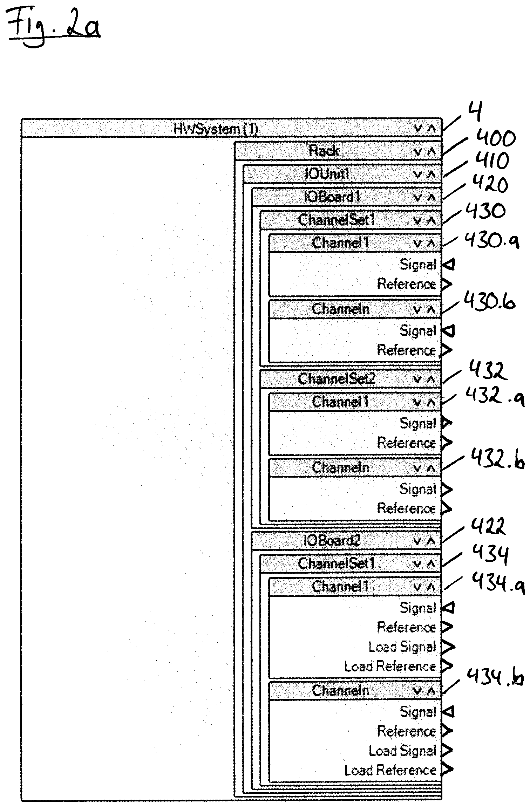

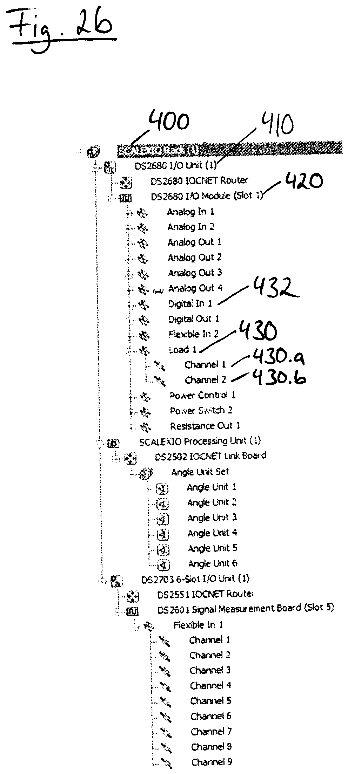

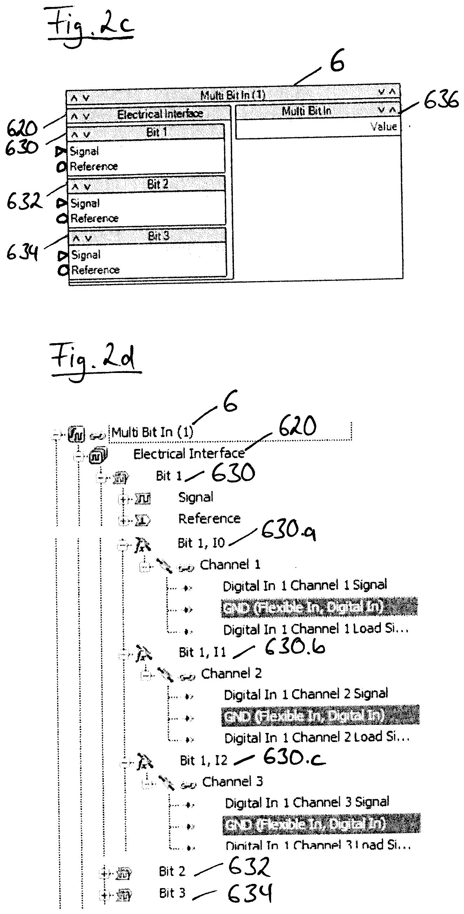

Fig. 2 zeigt eine beispielhafte Hierarchiestruktur der Eingabe/Ausgabe-Schnittstelle 4, dargestellt als hierarchische Blockstruktur. Die Hierarchiestruktur der Eingabe/Ausgabe-Schnittstelle 4 wird auch Schnittstellen-Hierarchiestruktur genannt. Die oberste Hierarchieebene der Schnittstellen-Hierarchiestruktur ist die gesamte Eingabe/Ausgabe-Schnittstelle 4, auch als HW-System bezeichnet. In dem Ausführungsbeispiel von Fig. 2 weist die Eingabe/Ausgabe-Schnittstelle 4 genau eine Halterung 400 für Anschlussstrukturen, ein sogenanntes Rack 400, auf. Das Rack 400 bildet eine Montage-Einheit, in der Anschlüsse untergebracht sind. Das Rack 400 weist eine Eingabe/Ausgabe-Einheit 410, auch als I/O Unit bezeichnet, auf. Es können auch mehrere solcher Eingabe/Ausgabe-Einheiten vorhanden sein, die Montage-Untereinheiten sind. Die Eingabe/Ausgabe-Einheit weist zwei Leiterplatten 420 und 422 auf, auf denen jeweils mehrere physikalische Anschlüsse untergebracht sind. Die Leiterplatten 420 und 422 sind Montage-Einheiten niedrigerer Ebene, die in die Eingabe/Ausgabe-Einheit 410 eingebracht werden können, und werden auch als I/O Boards bezeichnet. An Stelle der I/O Boards bzw. zusätzlich zu den I/O Boards können auch Eingabe/Ausgabe-Module, auch als I/O Modules bezeichnet, vorhanden sein, die ebenfalls Montage-Einheiten darstellen. Im vorliegenden Fall hat das I/O Board 420 zwei Kanalgruppen 430 und 432, und das I/O Board 422 hat eine Kanalgruppe 434. Die Kanalgruppen werden auch als Channel Sets bezeichnet. Jede Kanalgruppe kann wiederum einen oder mehrere Kanäle aufweisen. Im vorliegenden Fall hat jede Kanalgruppe eine Mehrzahl gleicher Kanäle. Kanalgruppe 430 hat zwei Kanäle 430.a und 430.b, Kanalgruppe 432 hat ebenfalls zwei Kanäle 432.a und 432.b und Kanalgruppe 434 hat ebenso zwei Kanäle 434.a und 434.b. Das Rack 410, die Eingabe/Ausgabe-Einheit 410, die I/O Boards 420 und 422, die Kanalgruppen 430, 432 und 434 sowie die Kanäle 430.a, 430.b, 432.a, 432.b, 434.a und 434.b sind Hierarchieelemente der Schnittstellen-Hierarchiestruktur.

Jeder der Kanäle von Fig. 2 ist mit Stecker-Pins der physikalischen Anschlüsse der Eingabe/Ausgabe-Schnittstelle assoziiert. Z.B. ist der Kanal 430.a mit einem Signal-Pin und einem Referenz-Pin assoziiert. Das bedeutet, dass der von Kanal 430.a bereitgestellte Signalfluss über diese zwei Stecker-Pins erfolgt. Je nach Art des Kanals können verschiedene Stecker-Pins zur physikalischen Signal-Übertragung vorgesehen sein. Für Kanal 434.a sind beispielsweise noch ein Last-Signal-Pin (Load Signal) und ein Last-Referenz-Pin (Load Reference) gezeigt. Dabei müssen unterschiedliche Kanäle nicht auf unterschiedliche Stecker-Pins zugreifen. Mehrere Kanäle können sich die gleichen Stecker-Pins teilen. In anderen Worten, auf einer physikalischen Übertragungsstrecke können mehrere Signal-Kanäle gelegt sein. In noch anderen Worten, es ist möglich, dass Kanäle jeweils eine Mehrzahl von Stecker-Pins benötigen, während es auch möglich ist, dass Stecker-Pins von einer Mehrzahl von Kanälen gemeinsam benutzt werden. Je nach Art des Anschlusses und Art der übertragenen Signale können die Stecker-Pins verschiedene Formen und Eigenschaften haben und/oder verschiedene Standards erfüllen. Bezüglich der physikalischen Ausgestaltung der einzelnen Anschlüsse der Eingabe/Ausgabe-Schnittstelle gibt es eine Vielzahl von möglichen Ausgestaltungen.

Die Anschlüsse der Eingabe/Ausgabe-Schnittstelle können unterschiedlicher Art sein. Zum Beispiel kann es Analog-Anschlüsse und Digital-Anschlüsse geben. Die Anschlüsse können unidirektional oder bidirektional sein. Die Anschlüsse können verschiedene Spannungs- und Strom-Niveaus unterstützen. Weiterhin können die Anschlüsse z.B. Schalter-Anschlüsse oder Masse-Anschlüsse oder Anschlüsse an Last-Widerstände sein. Die Eingabe/Ausgabe-Schnittstelle 4 kann im Allgemeinen alle Arten von Anschlüssen aufweisen, an die ein Steuergerät 20 oder ein zu steuerndes Gerät, wie z.B. ein Aktuator, oder ein Messgerät, wie z.B. ein Sensor, oder ein anderes geeignetes Gerät im späteren Betrieb potentiell angeschlossen sein kann.

Die oben genannten Eigenschaften der Anschlüsse sind Attribute der Anschlüsse, welche diese charakterisieren. Ebenso haben das Rack 400 sowie die Eingabe/Ausgabe-Einheit 410 sowie die I/O Boards 420 und 422 sowie die Kanalgruppen 430, 432 und 434 sowie die einzelnen Kanäle Attribute, die sie charakterisieren. Jedes Hierarchieelement ist durch Attribute charakterisiert.

Fig. 2b zeigt eine beispielhafte Teilhierarchiestruktur einer weiteren beispielhaften Eingabe/Ausgabe-Schnittstelle. Zu Fig. 2a ähnliche Hierarchieelemente sind zur besseren Übersichtlichkeit mit den gleichen Bezugszeichen versehen. In Fig. 2b sind die Hierarchieelemente in einer Baumstruktur dargestellt. Die oberste gezeigte Hierarchieebene ist das Rack 400. Dieses ist in Fig. 2b als "SCALEXIO Rack" bezeichnet, wobei die Bezeichnung Scalexio ® sich auf einen HIL-Simulator der dSPACE GmbH aus Paderborn, Deutschland bezieht. Insofern ergibt sich eine derartige Baumstruktur, wie in Fig. 2b gezeigt, auch aus der Benutzung bzw. Dokumentation des Scalexio ® HIL-Simulators. Fig. 2b zeigt anschaulich die Hierarchieelemente verschiedener Hierarchieebenen. Zum einfachen Vergleich mit Fig. 2a ist die "DS2680 I/O Unit" mit Bezugszeichen 410, das "DS2680 I/O Module" mit Bezugszeichen 420, die Kanalgruppe "Digital In 1" mit Bezugszeichen 432, die Kanalgruppe "Load 1" mit Bezugszeichen 430 sowie die darin enthaltenen Kanäle "Channel 1" und "Channel 2" mit Bezugszeichen 430.a und 430.b versehen. Die in Fig. 2b enthaltenen Bezeichnungen der Hierarchieelemente sind großteils zumindest an die englische Sprache angelehnt, weil die Betriebssprache des Scalexio ® HIL-Simulators Englisch ist und weil die meisten der Begriffe auch in der deutschen Fachsprache auf Englisch benutzt werden. Die Sprache der Bezeichnungen hat für das Funktionieren der Erfindung keine Relevanz. Es ist ersichtlich, dass die Kanalgruppen eine breite Palette verschiedener Eigenschaften haben können, wie z.B. mit Analog- oder Digital-, Last- oder Schalter-Anschlüssen assoziiert sein können.

Die Eingabe/Ausgabe-Funktionen 6 sind ebenfalls hierarchisch organisiert. Sie haben eine Funktions-Hierarchiestruktur. Die Funktions-Hierarchiestruktur kann sich an einem Modell 8 des zu steuernden technischen Systems orientieren, was aber nicht zwangsläufig der Fall ist. Wenn das verwendete Modell 8 das Modell eines zu steuernden Motors ist, kann die Funktions-Hierarchiestruktur folgendermaßen aufgebaut sein: die oberste Hierarchieebene bezeichnet die Gesamtheit aller Funktionen, die mit der Gesamtheit aller Eingabe/Ausgabe-Anschlüsse des Motormodells kommunizieren; die Hierarchieelemente der zweit-obersten Hierarchieebene sind Funktionen, die jeweils mit den modellierten Eingabe/Ausgabe-Anschlüssen der einzelnen Motormodule kommunizieren; die Hierarchieelemente der dritt-obersten Hierarchieebene sind die Funktionsteile, die die Kommunikation mit den modellierten eigentlichen Eingabe/Ausgabe-Anschlüsse des Motors übernehmen, also die Kommunikation mit den modellierten Sensoren und Aktuatoren des Motors übernehmen; die Hierarchieelemente der darunter liegenden Hierarchieebene stellen wiederum die Kanäle auf den modellierten Eingabe/Ausgabe-Anschlüssen des Motors dar.

In abstrakteren Worten kann die Funktions-Hierarchiestruktur auch so beschrieben werden, dass es Funktionen gibt, welche wiederum Funktionsblöcke aufweisen, die wiederum elektrische Schnittstellen als Funktionselemente haben, die ihrerseits Signalgruppen als Funktionselemente haben, welche wiederum Kanalanforderungen, sogenannte Channel Requests, haben. Es wird betont, dass es auch auf der Funktions-Seite viele verschiedene Hierarchiestrukturen geben kann. Die vorstehend genannten Hierarchieebenen sind lediglich beispielhaft. Die Funktions-Hierarchiestruktur kann auch mehr oder weniger und/oder andere Hierarchieebenen haben.

Fig. 2c zeigt eine beispielhafte Hierarchiestruktur einer Eingabe/Ausgabe-Funktion 6, dargestellt in einer hierarchischen Block-Struktur. Die Eingabe/Ausgabe-Funktion 6 trägt den Namen "Multi Bit In", bezieht sich also auf eine digitale Eingabe-Funktion. Die Eingabe/Ausgabe-Funktion 6 hat eine elektrische Schnittstelle 620, auch als Electrical Interface bezeichnet, als untergeordnetes Hierarchieelement. Die elektrische Schnittstelle 620 hat drei sogenannte Signalgruppen 630, 632 und 634, bezeichnet mit "Bit 1", "Bit 2" und "Bit 3". Die Signalgruppen können die unterste Hierarchieebene bilden. Es ist aber auch möglich, dass unter den Signalgruppen noch Kanalanforderungen als Hierarchieelemente angeordnet sind, die in Fig. 2c nicht gezeigt sind, auf die aber mit Bezug auf Fig. 2d eingegangen wird. Die mit "Signal" und "Reference" bezeichneten Eigenschaften beziehen sich auf den Zugang zu Stecker-Pins, den Kanäle auf Seiten der Eingabe/Ausgabe-Schnittstelle haben müssen, damit eine kompatible Verbindung vorliegen kann. Die Eingabe/Ausgabe-Funktion 6 hat weiterhin eine mit "Multi Bit In" bezeichnete Signalgruppe 636.

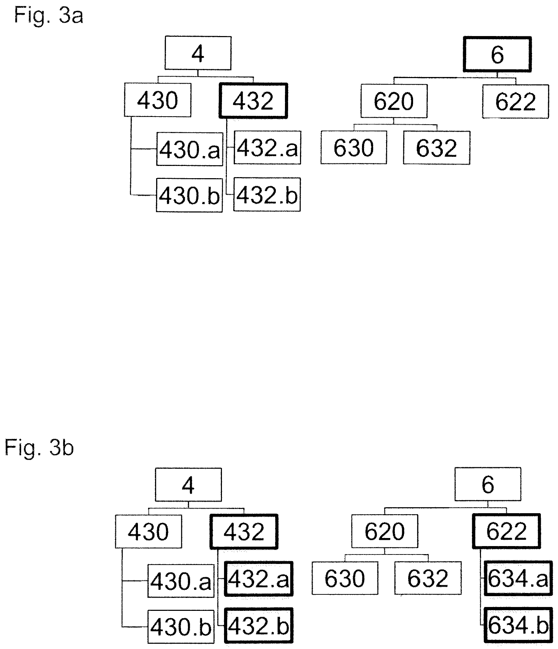

Fig. 2d zeigt die beispielhafte Teilhierarchiestruktur der Fig. 2c in einer anderen Darstellungsweise, nämlich als Baumstruktur. Allerdings zeigt die Baumstruktur der Fig. 2d zusätzlich die Kanalanforderungen 630.a, 630.b und 630.c, die alle Hierarchie-mäßig unterhalb der Signalgruppe 630 angeordnet sind. Auch zeigt die Baumstruktur der Fig. 2d für die drei Kanalanforderungen 630.a, 630.b und 630.c die damit verbundenen Kanäle, bezeichnet mit "Channel 1", "Channel 2" und "Channel 3". Insofern illustriert die Baumstruktur der Fig. 2d nicht nur einen Teil der Funktions-Hierarchiestruktur, sondern auch drei erstellte kompatible Verbindungen. Der Prozess des Erstellens der kompatiblen Verbindungen wird nachfolgend mit Bezug auf Fig. 3-6 beschrieben. Fig. 2d illustriert ein beispielhaftes Ergebnis von solchen beispielhaften Verfahren zum Verbinden der Eingabe/Ausgabe-Schnittstelle. In dem Beispiel von Fig. 2d sind die Kanalanforderungen 630.a, 630.b und 630.c mit Kanälen der Kanalgruppe 432 aus Fig. 2b verbunden. Dies ist aus der Beschreibung der kompatiblen Verbindungen in Fig. 2d ersichtlich. Z.B. ist für die Kanalanforderung 630.a, bezeichnet mit "Bit 1, I0" die Verbindung unter anderem charakterisiert durch "Digital In 1 Channel 1 ...", wobei die Kanalgruppe 432 in Fig. 2b mit "Digital In 1" bezeichnet ist.

Es ist wichtig herauszustellen, dass sowohl die Eingabe/Ausgabe-Schnittstelle als auch die Eingabe/Ausgabe-Funktionen hierarchisch organisiert sind. Diese hierarchische Organisation kann auf verschiedene Weise graphisch dargestellt werden, z.B. durch ein strukturiertes Blockdiagramm, wie in Fig. 2a oder Fig. 2c, oder durch eine Baumstruktur, wie in Fig. 2b oder Fig. 2d. Zur besseren Übersichtlichkeit werden beispielhafte Durchführungen des Verfahrens in den folgenden Figuren an Hand von zwei Baumstrukturen erläutert, wobei die zwei Baumstrukturen die erste und die zweite Hierarchiestruktur darstellen.

Fig. 3 zeigt ein erstes Beispiel der Schnittstellen-Hierarchiestruktur sowie eines Teils der Funktions-Hierarchiestruktur im Verlauf eines beispielhaften Verfahrens gemäß der Erfindung. Mit Bezug auf Fig. 3 wird ein Beispiel veranschaulicht, wie eine Schnittstellen-Hierarchiestruktur und eine Funktions-Hierarchiestruktur bereitgestellt werden können. Die linke Baumstruktur ist ein Abbild einer hierarchischen Eingabe/Ausgabe-Schnittstelle 4. Der Wurzelknoten der Schnittstellen-Hierarchiestruktur, auch mit Bezugszahl 4 versehen, bildet die oberste Hierarchieebene. Eine Hierarchieebene unterhalb der obersten Hierarchieebene sind zwei Knoten 430 und 432 vorhanden, die beide mit dem Wurzelknoten 4 assoziiert sind. In der Diktion von Hierarchiestrukturen kann man auch sagen, dass der Wurzelknoten die beiden Knoten 430 und 432 enthält. Weiterhin enthält die Schnittstellen-Hierarchiestruktur vier Hierarchieelemente der untersten Hierarchieebene, nämlich die Hierarchieelemente 430.a, 430.b, 432.a und 432.b. Als Hierarchieelemente der untersten Hierarchieebene werden die Hierarchieelemente 430.a, 430.b, 432.a und 432.b auch als Blätter der Baumstruktur, als sogenannte Leafs, bezeichnet. Die Leafs 430.a und 430.b sind mit dem Knoten 430 assoziiert, während die Leafs 432.a und 432.b mit dem Knoten 432 assoziiert sind. Der Wurzelknoten 4, die Knoten 430 und 432 sowie die Leafs 430.a, 430.b, 432.a und 432.b sind alle Hierarchieelemente und bilden zusammen ein Abbild der Eingabe/Ausgabe-Schnittstelle des Testgeräts.

In Fig. 3 ist nur ein Teil der Funktions-Hierarchiestruktur dargestellt. Insbesondere ist in Fig. 3a eine einzelne Eingabe/Ausgabe-Funktion 6 in hierarchischer Darstellung gezeigt. Auch der Teil der Funktions-Hierarchiestruktur beinhaltet einen Wurzelknoten. Dieser ist ebenso wie die Eingabe/Ausgabe-Funktion 6 in Fig. 1 mit dem Bezugszeichen 6 versehen.

Eine Hierarchieebene unterhalb des Wurzelknotens 6 sind zwei Knoten 620 und 622 angeordnet, die beide von dem Wurzelknoten 6 abhängen. Der Knoten 620 wiederum enthält zwei Unterknoten 630 und 632. Der Wurzelknoten 6, die zwei Knoten 620 und 622 sowie die zwei Unterknoten 630 und 632 sind alle Hierarchieelemente, die gemeinsam die Funktions-Hierarchiestruktur bilden. Die Funktions-Hierarchiestruktur enthält zu dem gezeigten Zeitpunkt (noch) keine Hierarchieelemente der untersten Hierarchieebene, d.h. noch keine Leafs. Dies ist möglich, weil die Eingabe/Ausgabe-Funktionen ein Software-Konstrukt sind, in dem weitere Hierarchieelemente jederzeit erzeugt werden können.

Die zwei Hierarchiestrukturen von Fig. 3a sind in etwa gleich groß dargestellt, d.h. mit einer ähnlichen Anzahl von Hierarchieelementen. Dies ist rein beispielhaft zum besseren Verständnis. In vielen Fällen ist es so, dass die Schnittstellen-Hierarchiestruktur, die eine sehr komplexe Eingabe/Ausgabe-Schnittstelle 4 abbildet, selbst ein sehr verzweigtes Gebilde ist. Demgegenüber ist eine einzelne Eingabe/Ausgabe-Funktion 6 in vielen Fällen deutlich weniger komplex. Erst die Gesamtheit aller Eingabe/Ausgabe-Funktionen führt zu einer weit verzweigten Funktions-Hierarchiestruktur.

Der Vollständigkeit halber sei noch erwähnt, dass die hier beschriebene Funktionalität bzw. die hier beschriebenen Eigenschaften der Eingabe/Ausgabe-Funktionen 6 nur für die Verbindung zur Eingabe/Ausgabe-Schnittstelle hin verantwortlich sind. Die Verbindung zwischen den Eingabe/Ausgabe-Funktionen und dem einen oder mehreren Modellen 8 ist nicht Gegenstand der Beschreibung der beispielhaften Verfahren mit Bezug zu Fig. 3-6.

Das beispielhafte Verfahren gemäß der Erfindung ermöglicht nach der Bereitstellung der Schnittstellen-Hierarchiestruktur und der Funktions-Hierarchiestruktur die Auswahl eines beliebigen ersten Hierarchieelements aus den beiden Hierarchiestrukturen. Für den beispielhaften Verfahrensablauf wird angenommen, dass die Auswahl, durch einen menschlichen Benutzer durch ein Konfigurationsprogramm, auf den Knoten 432 fällt. In anderen Worten, das Verfahren beinhaltet in dem beispielhaften Ablauf das Empfangen der Auswahl des Knotens 432. Diese Auswahl des Knotens 432 ist in Fig. 3a durch den dicken Rahmen veranschaulicht. Dadurch ist der Knoten 432 als erstes Hierarchieelement festgelegt. Durch diese Auswahl wird weiterhin festgelegt, dass die Schnittstellen-Hierarchiestruktur die erste Hierarchiestruktur ist, was wiederum implizit festlegt, dass die Funktions-Hierarchiestruktur die zweite Hierarchiestruktur ist. Ebenso wird durch die Auswahl des Knotens 432 eine erste Teilhierarchiestruktur festgelegt, die den Knoten 432 und die Leafs 432.a und 432.b enthält, also das erste Hierarchieelement und alle in der ersten Hierarchiestruktur unter dem ersten Hierarchieelement angeordneten Hierarchieelemente enthält.

Es wird explizit darauf hingewiesen, dass es dem Benutzer oder dem Konfigurationsprogramm frei steht, das erste Hierarchieelement aus der Funktions-Hierarchiestruktur auszuwählen. In diesem Fall ist dann die Funktions-Hierarchiestruktur die erste Hierarchiestruktur, ist die Schnittstellen-Hierarchiestruktur die zweite Hierarchiestruktur, und ist die erste Teilhierarchiestruktur ein Teil der Funktions-Hierarchiestruktur. Zum einfacheren Verständnis wird in den Figuren 3-6 davon ausgegangen, dass durch den Benutzer oder das Konfigurationsprogramm das erste Hierarchieelement aus der Schnittstellen-Hierarchiestruktur ausgewählt wird und dass das Verfahren somit die Schnittstellen-Hierarchiestruktur als erste Hierarchiestruktur festlegt.

Nach der Auswahl des Knotens 432 als erstes Hierarchieelement ermöglicht das Verfahren die Auswahl eines zweiten Hierarchieelements, das aus der zweiten Hierarchiestruktur, im vorliegenden Fall also aus der Funktions-Hierarchiestruktur, stammen muss. Außer dieser Bedingung, dass das zweite Hierarchieelement aus der zweiten Hierarchiestruktur stammen muss, gibt es keinerlei Beschränkungen bezüglich der Auswahl der zweiten Hierarchieelements. Insbesondere gibt es keine Beschränkung bezüglich der Hierarchieebene des zweiten Hierarchieelements. Im vorliegenden Beispiel wird angenommen, dass die Auswahl auf den Wurzelknoten 6 fällt. Das Verfahren empfängt den Wurzelknoten 6 als Auswahl des zweiten Hierarchieelements. Durch die Auswahl des zweiten Hierarchieelements wird eine zweite Teilhierarchiestruktur festgelegt, die das zweite Hierarchieelement und alle darunter liegenden Hierarchieelemente umfasst. Da das zweite Hierarchieelement im vorliegenden Beispiel der Wurzelknoten 6 ist, entspricht die zweite Teilhierarchiestruktur der gesamten Schnittstellen-Hierarchiestruktur. Daraus ist ersichtlich, dass der Begriff Teilhierarchiestruktur bedeutet, dass die Teilhierarchiestruktur ein Teil der gesamten Hierarchiestruktur, aber auch die gesamte Hierarchiestruktur sein kann. Die Auswahl des Wurzelknotens 6 ist ebenfalls durch einen dicken Rahmen veranschaulicht.

Das Verfahren überprüft nach dem Isolieren der ersten Teilhierarchiestruktur und der zweiten Teilhierarchiestruktur, welche kompatiblen Verbindungen zwischen den Hierarchieelementen der ersten Teilhierarchiestruktur und den Hierarchieelementen der zweiten Teilhierarchiestruktur möglich sind. Dabei vergleicht das Verfahren die jeweiligen Charakteristika der zur Verfügung stehenden Hierarchieelemente. In dem vorliegenden Beispiel wird in dem beispielhaften Verfahren festgestellt, dass der Knoten 432 und der Knoten 622 kompatibel sind. Außerdem wird festgestellt, dass der Knoten 622 so konfiguriert ist, dass von ihm abhängige Leafs 634.a und 634.b neu erstellt werden können. Auf der Basis dieser Information über die Kompatibilitäten der Hierarchieelemente werden durch das Verfahren eine kompatible Verbindung zwischen dem Knoten 432 und dem Knoten 622 sowie zwei weitere kompatible Verbindungen auf der untersten Hierarchieebene, nämlich zwischen dem Leaf 432.a und dem Leaf 634.a sowie zwischen dem Leaf 432.b und dem Leaf 634.b, automatisch konfiguriert. Die durch diese kompatiblen Verbindungen miteinander verbundenen Hierarchieelemente sind in Fig. 3b mit einem dicken Rahmen veranschaulicht. Die kompatiblen Verbindungen ermöglichen zum Simulationszeitpunkt die Kommunikation der Eingabe/Ausgabe-Schnittstelle 4 mit den Eingabe/Ausgabe-Funktionen 6 und somit mit dem in dem Testgerät vorhandenen Modell.

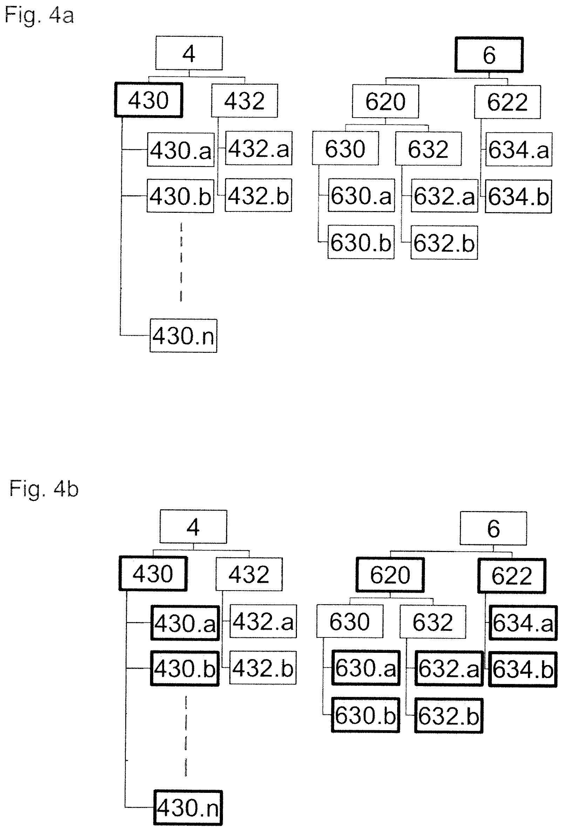

In Fig. 4 ist ein zweiter beispielhafter Verfahrensablauf gemäß der Erfindung veranschaulicht. Die Schnittstellen-Hierarchiestruktur aus Fig. 4 ist ähnlich der Schnittstellen-Hierarchiestruktur aus Fig. 3. Allerdings hat der Knoten 430 eine Anzahl von n Leafs, wobei n größer oder gleich sechs ist. Die Funktions-Hierarchiestruktur aus Fig. 4 ist umfassender als die Funktionshierarchiestruktur aus Fig. 3. Sowohl die beiden Unterknoten 630 und 632 als auch der Knoten 622 haben jeweils zwei Leafs. Der Unterknoten 630 hat die zwei Leafs 630.a und 630.b, der Unterknoten 632 hat die zwei Leafs 632.a und 632.b, und der Knoten 622 hat die zwei Leafs 634.a und 634.b.

Bei dem beispielhaften Verfahrensablauf aus Fig. 4 werden der Knoten 430 als erstes Hierarchieelement und der Wurzelknoten 6 als zweites Hierarchieelement ausgewählt, was wiederum durch einen dicken Rahmen in Fig. 4a veranschaulicht ist. Somit umfasst die erste Teilhierarchiestruktur den Knoten 430 und die Leafs 430.a, 430.b, ..., 430.n. Die zweite Teilhierarchiestruktur umfasst wiederum die ganze Funktions-Hierarchiestruktur.

Nach der Auswahl des ersten Hierarchieelements 430 und des zweiten Hierarchieelements 6 wird festgestellt, dass im vorliegenden beispielhaften Fall die Leafs 430.a, 430.b, ..., 430.n mit allen Leafs der Funktions-Hierarchiestruktur kompatibel sind. Deshalb werden die in Fig. 4b durch dicke Rahmen angezeigten kompatiblen Verbindungen automatisch konfiguriert. Dabei wird der Knoten 430 sowohl mit dem Knoten 620 als auch mit dem Knoten 622 verbunden. Weitere sechs kompatible Verbindungen werden auf der untersten Hierarchieebene erstellt, und zwar zwischen Leaf 430.a und Leaf 630.a, zwischen Leaf 430.b und Leaf 630.b, zwischen Leaf 430.c (nicht gezeigt) und Leaf 632.a, zwischen Leaf 430.d (nicht gezeigt) und Leaf 632.b, zwischen Leaf 430.e (nicht gezeigt) und Leaf 634.a sowie zwischen Leaf 430.n und Leaf 634.b. Es wird darauf hingewiesen, dass es in dem vorliegenden Beispiel möglich ist, dass Hierarchieelemente, die nicht auf der untersten Hierarchieelemente liegen, Bestandteil mehrerer kompatibler Verbindungen sein können, wie z.B. Knoten 430. Demgegenüber können in dem beschriebenen Beispiel Hierarchieelemente der untersten Hierarchieebene nur jeweils Teil einer kompatiblen Verbindung sein.

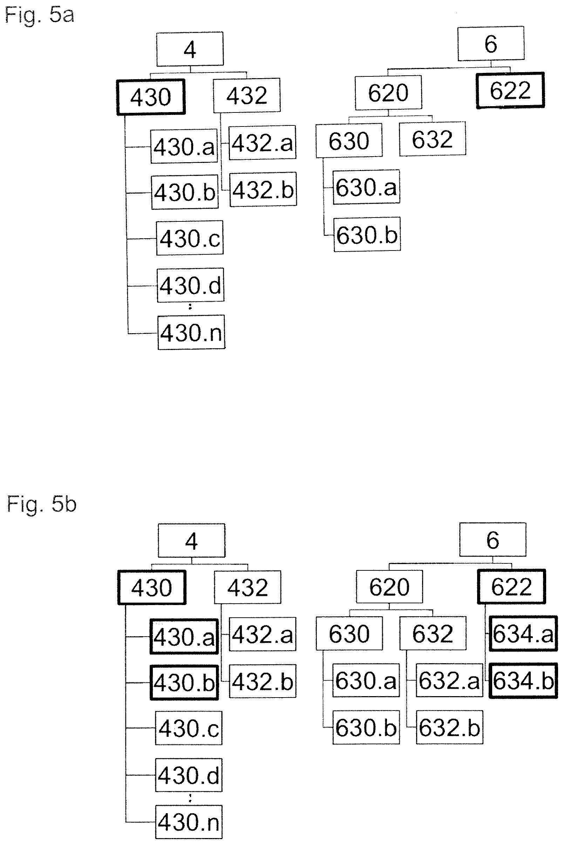

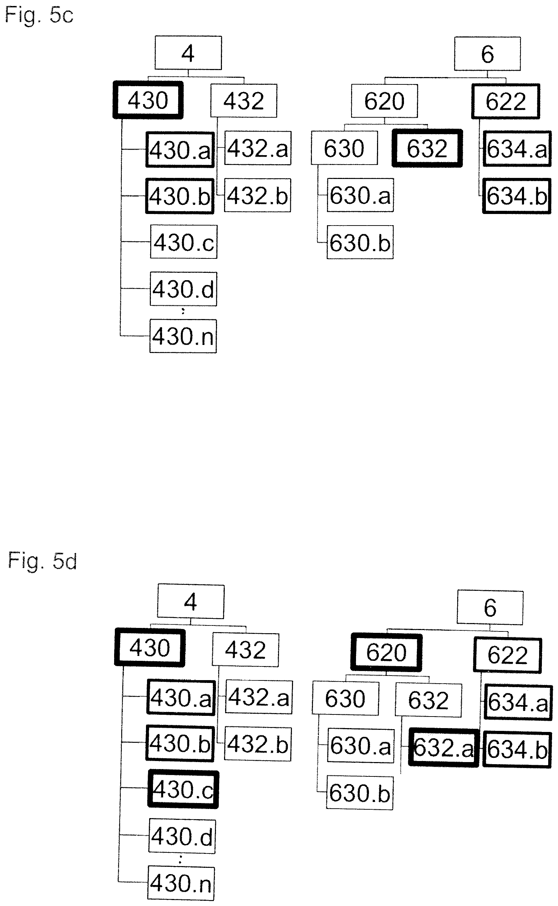

In Fig. 5 wird eine iterative Durchführung eines beispielhaften Verfahrens gemäß der Erfindung veranschaulicht. Die Schnittstellen-Hierarchiestruktur aus Fig. 5 entspricht der Schnittstellen-Hierarchiestruktur aus Fig. 4 (vgl. Fig. 5a und Fig. 4a). Die Funktions-Hierarchiestruktur der Fig. 5 entspricht der Funktionshierarchiestruktur der Fig. 3 mit der Ausnahme, dass der Unterknoten 630 zwei Leafs 630.a und 630.b aufweist (vgl. Fig. 5a und Fig. 3a). Durch die dicken Rahmen in Fig. 5a wird illustriert, dass in einem beispielhaften ersten Verfahrensdurchlauf der Knoten 430 und der Knoten 622 als erstes bzw. zweites Hierarchieelement ausgewählt werden. Die zweite Hierarchiestruktur besteht somit nur aus dem Hierarchieelement 622.

Beim Bestimmen der kompatiblen Verbindungen wird aus den Attributen des Knotens 622 festgestellt, dass von dem Knoten 622 genau zwei zu den Leafs 430.a und 430.b kompatible Hierarchieelemente abhängig gemacht werden können. Als Folge davon werden eine kompatible Verbindung zwischen dem Knoten 430 und dem Knoten 622 sowie zwei kompatible Verbindungen zwischen den Leafs 430.a und 634.a und zwischen den Leafs 430.b und 634.b automatische konfiguriert. Die kompatiblen Verbindungen sind durch dicke Rahmen in Fig. 5b veranschaulicht. Damit ist der erste Verfahrensdurchlauf abgeschlossen.

Ein daran anschließender zweiter Verfahrensdurchlauf ist in den Fig. 5c und 5d veranschaulicht. In dem zweiten Verfahrensdurchlauf werden der Knoten 430 und der Unterknoten 632 als erstes und zweites Hierarchieelement ausgewählt, was durch die fetten Rahmen in Fig. 5c veranschaulicht ist. Die in dem ersten Verfahrensdurchlauf automatisch konfigurierten Verbindungen werden in Fig. 5c weiterhin durch die dicken Rahmen dargestellt.

Beim Bestimmen der kompatiblen Verbindungen wird in dem beispielhaften zweiten Verfahrensdurchlauf von Fig. 5 festgestellt, dass von dem Unterknoten 632, der noch kein Leaf enthält, genau ein Leaf abhängig gemacht werden kann, das zu dem Leaf 430.c kompatibel ist. Dieses Leaf, in Fig. 5d mit 632.a bezeichnet, wird erzeugt, und eine kompatible Verbindung zwischen dem Leaf 430.c und dem Leaf 632.a wird konfiguriert.

Beim Bestimmen der kompatiblen Verbindungen wird weiterhin festgestellt, dass der Knoten 620, der sich in der zweiten Hierarchiestruktur oberhalb des als zweiten Hierarchieelements ausgewählten Unterknotens 632 befindet, zu dem in der ersten Teilhierarchiestruktur vorhandenen Knoten 430 kompatibel ist. Auch wenn sich der Knoten 620 außerhalb der zweiten Teilhierarchiestruktur befindet, wird die kompatible Verbindung zwischen dem Knoten 430 und dem Knoten 620 erstellt. Somit ist der Knoten 430 Teil von zwei kompatiblen Verbindungen, nämlich Teil einer ersten kompatiblen Verbindung zwischen dem Knoten 430 und dem Knoten 622 und Teil einer zweiten kompatiblen Verbindung zwischen dem Knoten 430 und dem Knoten 620.

Die in dem zweiten Verfahrensdurchlauf hinzugekommenen kompatiblen Verbindungen sind durch die fetten Rahmen der beteiligten Hierarchieelemente veranschaulicht. Am Ende der zwei Durchläufe ist eine Menge von kompatiblen Verbindungen konfiguriert worden, die sich aus den im ersten Durchlauf konfigurierten (dicker Rahmen) und den im zweiten Durchlauf konfigurierten (fetter Rahmen) kompatiblen Verbindungen zusammensetzt. Es könnte auch noch weitere Durchläufe geben. Zum Beispiel könnten in einem dritten Durchlauf der Knoten 430 und der Knoten 630 ausgewählt werden, wodurch kompatible Verbindungen zwischen dem Knoten 430.d und dem Knoten 630.a sowie zwischen dem Knoten 430.e (nicht gezeigt) und dem Knoten 630.b erzeugt werden könnten.

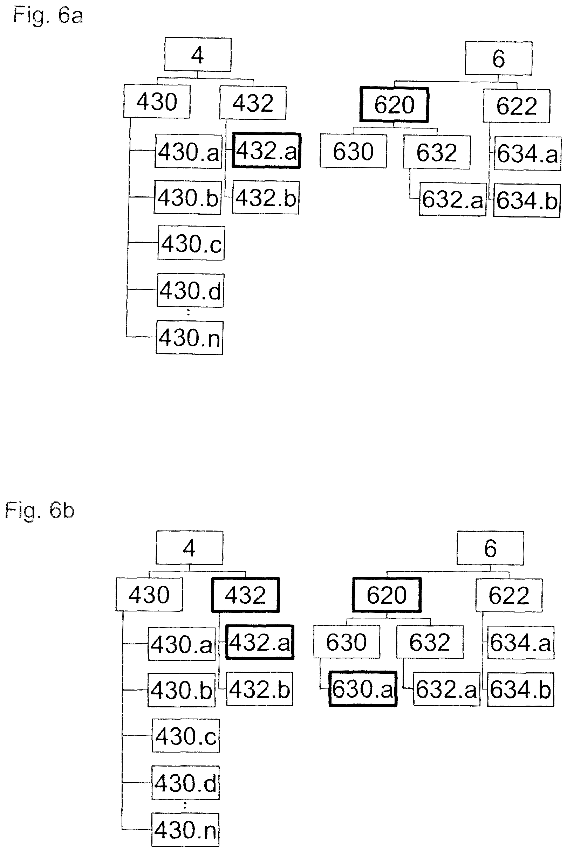

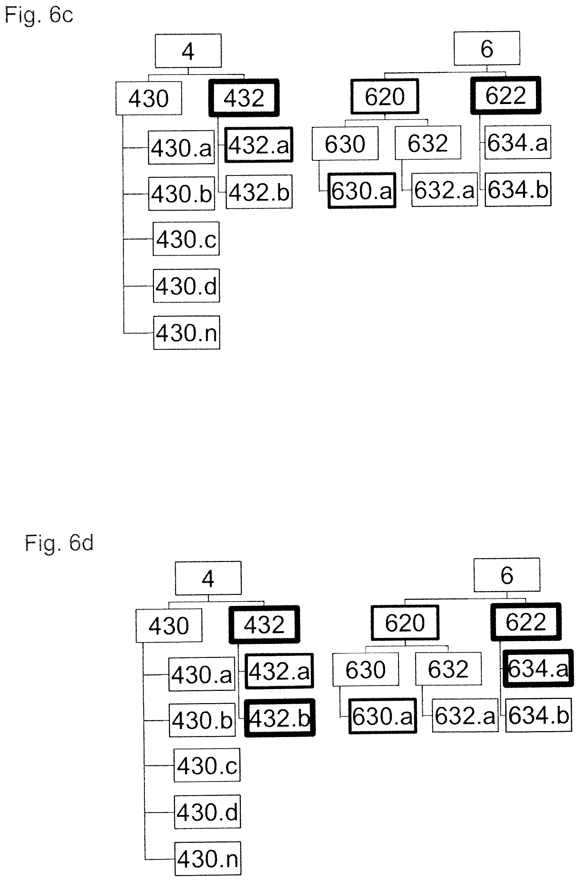

In Fig. 6 wird ebenfalls eine iterative Durchführung eines weiteren beispielhaften Verfahrens gemäß der Erfindung veranschaulicht. Die Schnittstellen-Hierarchiestruktur aus Fig. 6 entspricht wiederum der Schnittstellen-Hierarchiestruktur aus Fig. 4 (vgl. Fig. 6a und Fig. 4a). Die Funktions-Hierarchiestruktur der Fig. 6 entspricht der Funktionshierarchiestruktur der Fig. 3 mit den Ausnahmen, dass der Unterknoten 632 ein Leaf 632.a aufweist und dass der Knoten 622 zwei Leafs 634a. und 634.b aufweist (vgl. Fig. 5a und Fig. 3a). In einem ersten Verfahrensdurchlauf werden das Leaf 432.a und der Knoten 620 als erstes und zweites Hierarchieelement ausgewählt, wie durch die dicken Rahmen in Fig. 6a veranschaulicht.

Beim Bestimmen der kompatiblen Verbindungen im beispielhaften ersten Verfahrensdurchlauf wird festgestellt, dass das Leaf 432.a mit einem zu erstellenden Leaf 630.a, das von dem in der zweiten Teilhierarchiestruktur vorhandenen Unterknoten 630 abhängig gemacht werden kann, kompatibel wäre. Daraufhin wird das Leaf 630.a erstellt, und eine kompatible Verbindung zwischen dem Leaf 432.a und dem Leaf 630.a erstellt. Zusätzlich wird beim Bestimmten der kompatiblen Verbindungen festgestellt, dass der über dem ersten Hierarchieelement liegende Knoten 432 mit dem Knoten 620, der als zweites Hierarchieelement ausgewählt worden ist, kompatibel ist. Eine entsprechende kompatible Verbindung wird auch automatisch konfiguriert. Damit ist der erste Verfahrensdurchlauf abgeschlossen. Die Hierarchieelemente der konfigurierten kompatiblen Verbindungen sind durch dicke Rahmen markiert.

Ein zweiter beispielhafter Verfahrensdurchlauf ist in Fig. 6c und 6d illustriert. In dem beispielhaften zweiten Verfahrensdurchlauf werden der Knoten 432 und der Knoten 622 als erstes und zweites Hierarchieelement ausgewählt. Somit besteht die erste Teilhierarchiestruktur aus dem Knoten 432 sowie den Leafs 432.a und 432.b. Die zweite Teilhierarchiestruktur besteht aus dem Knoten 622 sowie den Leafs 634.a und 634.b. Das Leaf 432.a ist schon in dem ersten Verfahrensdurchlauf für eine kompatible Verbindung verwendet worden, so dass es nicht mehr für das Konfigurieren einer weiteren kompatiblen Verbindung zur Verfügung steht. Allerdings ist zwischen dem Leaf 432.b und dem Leaf 634.a eine kompatible Verbindung möglich, die von dem Verfahren automatisch konfiguriert wird. Außerdem wird eine kompatible Verbindung zwischen dem Knoten 432 und dem Knoten 622 erstellt. Die neuen kompatiblen Verbindungen sind in Fig. 6d durch fette Rahmen illustriert.

Es wäre auch möglich, dass bei dem zweiten beispielhaften Verfahrensdurchlauf die kompatible Verbindung aus dem ersten Verfahrensdurchlauf zwischen Leaf 432.a und Leaf 630.a gelöst wird und dass beide Leafs 432.a und 432.b mit den Leafs 634.a und 634.b in der zweiten Teilhierarchiestruktur im zweiten Verfahrensdurchlauf verbunden werden.

Bei den beschriebenen Verfahren ist es auch möglich, dass dem Benutzer bei der Auswahl des zweiten Hierarchieelements aus der zweiten Hierarchiestruktur eine graphische Hilfestellung an die Hand gegeben wird. Nach der Auswahl des ersten Hierarchieelements aus der ersten Hierarchiestruktur ist es z.B. möglich, dass diejenigen Hierarchieelemente der zweiten Hierarchiestruktur, in deren Teilhierarchiestrukturen kompatible Verbindungen möglich wären, farblich unterlegt sind oder anderweitig kenntlich gemacht werden. So kann der Benutzer sich in seiner Auswahl gleich auf sinnvolle Hierarchieelemente konzentrieren. Es ist auch möglich, dass diejenigen Hierarchieelemente, in deren Teilhierarchiestrukturen keine kompatiblen Verbindungen möglich wären, gekennzeichnet sind, z.B. durch ein rotes Kreuz oder ähnliches. Z.B. könnten in der graphischen Anzeige von Fig. 2c diejenigen Hierarchieelemente der Eingabe/Ausgabe-Funktion 6 durchgestrichen sein, die auf der Basis der Auswahl des ersten Hierarchieelements nicht zu einer kompatiblen Verbindung führen würden. Auch ist es möglich, dass das Verfahren nur eine Auswahl des zweiten Hierarchieelements ermöglicht bzw. annimmt, wenn in der betreffenden Teilhierarchiestruktur zumindest eine kompatible Verbindung möglich wäre.

Obwohl die Erfindung mit Bezug auf beispielhafte Ausführungsformen beschrieben worden ist, ist es für einen Fachmann ersichtlich, dass verschiedene Änderungen vorgenommen und Äquivalente verwendet werden können, ohne den Bereich der Erfindung zu verlassen. Die Erfindung soll nicht durch die beschriebenen spezifischen Ausführungsformen beschränkt sein. Vielmehr enthält sie alle Ausführungsformen, die unter die angehängten Patentansprüche fallen.

## Patentansprüche

1. Verfahren zum Verbinden einer Eingabe/Ausgabe-Schnittstelle (4) eines für das Testen eines Steuergeräts eingerichteten Testgeräts (2) mit einem in dem Testgerät (2) vorhandenen Modell eines technischen Systems, wobei die Eingabe/Ausgabe-Schnittstelle zum Anschluss des zu testenden Steuergeräts (20) oder zum Anschluss eines zu steuernden technischen Systems ausgebildet ist und das mit der Eingabe/Ausgabe-Schnittstelle (4) zu verbindende Modell ein Modell (8) des zu steuernden technischen Systems oder ein Modell des zu testenden Steuergeräts ist, wobei das Testgerät (2) weiterhin eine Mehrzahl von mit dem Modell verbundenen Eingabe/Ausgabe-Funktionen (6) aufweist,
**dadurch gekennzeichnet, dass** das Verfahren die folgenden Schritte aufweist:
(a) Bereitstellen einer Schnittstellen-Hierarchiestruktur, die ein Abbild zumindest eines Teils der Eingabe/Ausgabe-Schnittstelle (4) des Testgeräts (2) ist, eine Mehrzahl von Hierarchieebenen aufweist und aus einer ersten Menge von Hierarchieelementen (430, 432, 430.a, 430.b, 430.c, 430.d, 430.n, 432.a, 432.b) aufgebaut ist, wobei die erste Menge von Hierarchieelementen eine Mehrzahl von Kanälen (430.a, 430.b, 430.c, 430.d, 430.n, 432.a, 432.b) der Eingabe/Ausgabe-Schnittstelle (4) aufweist, welche die unterste Hierarchieebene der Schnittstellen-Hierarchiestruktur bilden,
(b) Bereitstellen einer Funktions-Hierarchiestruktur, die ein Abbild der Mehrzahl von Eingabe/Ausgabe-Funktionen (6) ist, eine Mehrzahl von Hierarchieebenen aufweist und aus einer zweiten Menge von Hierarchieelementen (620, 622, 630, 632, 630.a, 630.b, 632.a, 632.b, 634.a, 634.b) aufgebaut ist,
(c) Ermöglichen einer manuellen Auswahl eines beliebigen ersten Hierarchieelements aus einer beliebigen ersten Hierarchiestruktur, wobei die erste Hierarchiestruktur entweder die Schnittstellen-Hierarchiestruktur ist, wodurch die Funktions-Hierarchiestruktur als zweite Hierarchiestruktur festgelegt ist, oder wobei die erste Hierarchiestruktur die Funktions-Hierarchiestruktur ist, wodurch die Schnittstellen-Hierarchiestruktur als zweite Hierarchiestruktur festgelegt ist,
(d) Ermöglichen einer manuellen Auswahl eines zweiten Hierarchieelements aus der zweiten Hierarchiestruktur, wobei die Auswahl des zweiten Hierarchieelements nicht auf eine Hierarchieebene der zweiten Hierarchiestruktur beschränkt ist, die mit der Hierarchieebene des ersten Hierarchieelements korrespondiert,
(e) Isolieren einer ersten Teilhierarchiestruktur auf Basis der Auswahl des ersten Hierarchieelements, wobei die erste Teilhierarchiestruktur das erste Hierarchieelement und die von dem ersten Hierarchieelement abwärts gelegenen Hierarchieelemente umfasst,
(f) Isolieren einer zweiten Teilhierarchiestruktur auf Basis der Auswahl des zweiten Hierarchieelements, wobei die zweite Teilhierarchiestruktur das zweite Hierarchieelement und die von dem zweiten Hierarchieelement abwärts gelegenen Hierarchieelemente umfasst,
(g) Bestimmen von kompatiblen Verbindungen zwischen Hierarchieelementen der ersten Teilhierarchiestruktur und Hierarchieelementen der zweiten Hierarchiestruktur, insbesondere Bestimmen von kompatiblen Verbindungen zwischen den Hierarchieelementen der untersten Hierarchieebene der ersten Teilhierarchiestruktur und den Hierarchieelementen der untersten Hierarchieebene der zweiten Teilhierarchiestruktur, und
(h) automatisches Konfigurieren zumindest eines Teils der kompatiblen Verbindungen, so dass das in dem Testgerät (2) vorhandene Modell über zumindest den Teil der kompatiblen Verbindungen mit dem zu testenden Steuergerät (20) bzw. dem zu steuernden technischen System kommunizieren kann.

2. Verfahren nach Anspruch 1, wobei Schritt (h) **dadurch gekennzeichnet ist, dass** alle kompatiblen Verbindungen automatisch konfiguriert werden.

3. Verfahren nach einem der Ansprüche 1 und 2, wobei Schritt (h) aufweist:
automatisches Konfigurieren von Verbindungen höherer Ebene, wodurch Hierarchieelemente der ersten Teilhierarchiestruktur, die sich oberhalb der untersten Hierarchieebene befinden, und kompatible Hierarchieelemente der zweiten Teilhierarchiestruktur, die sich oberhalb der untersten Hierarchieebene befinden, verbunden werden.

4. Verfahren nach Anspruch 3, wobei für das automatische Konfigurieren von Verbindungen höherer Ebene zusätzlich Hierarchieelemente, die sich außerhalb der ersten Teilhierarchiestruktur oberhalb der ersten Hierarchieelements befinden, und/oder Hierarchieelemente, die sich außerhalb der zweiten Teilhierarchiestruktur oberhalb des zweiten Hierarchieelements befinden, berücksichtigt werden.

5. Verfahren nach einem der Ansprüche 1 bis 4, wobei zumindest ein Teil der Hierarchieelemente der Schnittstellen-Hierarchiestruktur und zumindest ein Teil der Hierarchieelemente der Funktions-Hierarchiestruktur, insbesondere zumindest ein Teil der Kanäle (430.a, 430.b, 430.c, 430.d, 430.n, 432.a, 432.b) und zumindest ein Teil der Hierarchieelemente der untersten Hierarchieebene der Funktions-Hierarchiestruktur, durch Attribute charakterisiert sind und wobei das Bestimmen von kompatiblen Verbindungen in Schritt (g) abhängig von der Kompatibilität der Attribute erfolgt.

6. Verfahren nach Anspruch 5, wobei die kompatiblen Verbindungen eine Mehrzahl von gleichartigen Verbindungen enthalten, wobei gleichartige Verbindungen zwischen Kanälen (430.a, 430.b, 430.c, 430.d, 430.n, 432.a, 432.b) und Hierarchieelementen der untersten Hierarchieebene der Funktions-Hierarchiestruktur mit gleichen Attributen bestehen, wobei die Kombination der gleichartigen Verbindungen eine kompatible Sammelverbindung bildet.

7. Verfahren nach einem der Ansprüche 1 bis 6, wobei für den Fall, dass in Schritt (g) festgestellt wird, dass es innerhalb der ersten und zweiten Teilhierarchiestruktur mehr Kanäle als Hierarchieelemente der untersten Hierarchieebene auf Seiten der Funktions-Hierarchiestruktur gibt, in Schritt (h) folgender Schritt zusätzlich ausgeführt wird: (h') Erzeugen zusätzlicher Hierarchieelemente der untersten Hierarchieebene auf Seiten der Funktions-Hierarchiestruktur und automatisches Konfigurieren von zusätzlichen kompatiblen Verbindungen unter Verwendung der erzeugten zusätzlichen Hierarchieelemente.

8. Verfahren nach einem der Ansprüche 1 bis 7, wobei Schritt (e) die Auswahl eines beliebigen zweiten Hierarchieelements aus der zweiten Hierarchiestruktur ermöglicht.

9. Verfahren nach einem der Ansprüche 1 bis 7, weiterhin aufweisend den folgenden Schritt, ausgeführt vor dem Schritt (d):
(k) für jedes der Hierarchieelemente zumindest eines Teils der zweiten Hierarchiestruktur, Isolieren einer jeweiligen Teilhierarchiestruktur, die das jeweilige Hierarchieelement und die von dem jeweiligen Hierarchieelement abwärts gelegenen Hierarchieelemente umfasst, und Prüfen, ob sich in der jeweiligen Teilhierarchiestruktur mindestens ein Hierarchieelement befindet, für das eine kompatible Verbindung mit einem Hierarchieelement der ersten Teilhierarchiestruktur möglich ist,
wobei in Schritt (d) nur eine Auswahl solcher Hierarchieelemente ermöglicht wird, für deren Teilhierarchiestruktur in Schritt (k) eine kompatible Verbindung festgestellt wurde.

10. Verfahren nach einem der Ansprüche 1 bis 9, wobei mindestens die Schritte (c) bis (h) in mehreren Durchläufen ausgeführt werden, wobei kompatible Verbindungen aus einem früheren Durchlauf für einen späteren Durchlauf nicht mehr zur Verfügung stehen.

11. Verfahren nach einem der Ansprüche 1 bis 10, wobei mindestens die Schritte (c) bis (h) in mehreren Durchläufen ausgeführt werden, wobei abhängig von der Auswahl des ersten und des zweiten Hierarchieelements Schritt (h) mindestens ein Mal die folgenden Schritte aufweist: Löschen von mindestens einer alten, in einem früheren Durchlauf konfigurierten kompatiblen Verbindung und Konfigurieren von mindestens einer neuen kompatiblen Verbindung, wobei mindestens ein Hierarchieelement der alten kompatiblen Verbindung für eine neue kompatible Verbindung verwendet wird.

12. Verfahren zum Testen eines Steuergeräts mit einem für das Testen des Steuergeräts eingerichteten Testgerät (2), aufweisend:
Ausführen des Verfahrens zum Verbinden der Eingabe/Ausgabe-Schnittstelle (4) des Testgeräts (2) nach einem der vorhergehenden Ansprüche, und
Ausführen einer Simulation, bei der das in dem Testgerät vorhandene Modell mit dem zu testenden Steuergerät (20) bzw. dem zu steuernden technischen System über die kompatiblen Verbindungen kommuniziert, die in Schritt (h) des Verfahrens automatisch konfiguriert worden sind.

13. Computerprogrammprodukt sowie Computerprogramm zur Ausführung eines Verfahrens zum Verbinden einer Eingabe/Ausgabe-Schnittstelle (4) eines Testgeräts (2), das so ausgebildet ist, dass ein Verfahren gemäß einem der Ansprüche 1 bis 11 ausgeführt wird.

14. Testgerät (2), das für das Testen eines Steuergeräts eingerichtet ist, eine Eingabe/Ausgabe-Schnittstelle (4) zum Anschluss des zu testenden Steuergeräts (20) oder zum Anschluss eines zu steuernden technischen Systems aufweist und ein Modell (8) des zu steuernden technischen Systems oder des zu testenden Steuergeräts sowie eine Mehrzahl von mit dem Modell verbundenen Eingabe/Ausgabe-Funktionen (6) aufweist,
wobei das Testgerät (2) eingerichtet ist, ein Verfahren gemäß einem der Ansprüche 1 bis 11 auszuführen.

15. Kombination eines Testgeräts nach Anspruch 14 und eines damit verbundenen, externen Rechner-Geräts, wie z.B. eines Computers, Tablets oder Mobilfunkgeräts,
wobei das externe Rechner-Gerät eingerichtet ist, ein Verfahren gemäß einem der Ansprüche 1 bis 11 auszuführen.

## Claims

1. A method for connecting an input/output interface (4) of a test device (2) set up for testing a control device having a model of a technical system present in the test device (2), the input/output interface being implemented for connecting the control device to be tested (20) or for connecting a technical system to be controlled and the model to be connected to the input/output interface (4) being a model (8) of the technical system to be controlled or a model of the control device to be tested, the test device (2) further comprising a plurality of input/output functions (6) connected to the model, **characterized in that** the method comprises the following steps:
(a) providing an interface hierarchy structure that is a mapping of at least a part of the input/output interface (4) of the test device (2), comprising a plurality of hierarchy levels and constructed from a first set of hierarchy elements (430, 432, 430.a, 430.b, 430.c, 430.d, 430.n, 432.a, 432.b), wherein the first set of hierarchy elements comprises a plurality of channels (430.a, 430.b, 430.c, 430.d, 430.n, 432.a, 432.b) of the input/output interface (4), which channels form the lowest hierarchy level of the interface hierarchy structure,
(b) providing a function hierarchy structure that is a mapping of the plurality of input/output functions (6), comprising a plurality of hierarchy levels, and constructed from a second set of hierarchy elements (620, 622, 630, 632, 630.a, 630.b, 632.a, 632.b, 634.a, 634.b),
(c) allowing a manual selection of any first hierarchy element from any first hierarchy structure, wherein the first hierarchy structure is either the interface hierarchy structure, whereby the function hierarchy structure is established as the second hierarchy structure, or wherein the first hierarchy structure is the function hierarchy structure, whereby the interface hierarchy structure is established as a second hierarchy structure,
(d) allowing a manual selection of a second hierarchy element from the second hierarchy structure, wherein the selection of the second hierarchy element is not limited to a hierarchy level of the second hierarchy structure that corresponds to the hierarchy level of the first hierarchy element,
(e) isolating a first partial hierarchy structure based on the selection of the first hierarchy element, wherein the first partial hierarchy structure comprises the first hierarchy element and the hierarchy elements situated below the first hierarchy element,
(f) isolating a second partial hierarchy structure based on the selection of the second hierarchy element, wherein the second partial hierarchy structure comprises the second hierarchy element and the hierarchy elements situated below the second hierarchy element,
(g) determining compatible connections between hierarchy elements of the first partial hierarchy structure and hierarchy elements of the second hierarchy structure, in particular determining compatible connections between the hierarchy elements of the lowest hierarchy level of the first partial hierarchy structure and the hierarchy elements of the lowest hierarchy level of the second partial hierarchy structure, and
(h) automatically configuring at least a part of the compatible connections so that the model present in the test device (2) can communicate with the control device (20) to be tested or with the technical system to be controlled via at least the part of the compatible connections.

2. The method according to claim 1, wherein step (h) is **characterized in that** all compatible connections are automatically configured.

3. The method according to one of claims 1 and 2, wherein step (h) comprises: automatically configuring connections of higher levels, whereby hierarchy elements of the first partial hierarchy structure located above the lowest hierarchy level and compatible hierarchy elements of the second partial hierarchy structure located above the lowest hierarchy level are connected.

4. The method according to claim 3, wherein for automatically configuring connections of higher levels, hierarchy elements located outside the first partial hierarchy structure above the first hierarchy element and/or hierarchy elements located outside the second partial hierarchy structure above the second hierarchy element are additionally considered.

5. The method according to one of claims 1 to 4, wherein at least a part of the hierarchy elements of the interface element hierarchy structure and at least a part of the hierarchy elements of the function hierarchy structure, in particular at least a part of the channels (430.a, 430.b, 430.c, 430.d, 430.n, 432.a, 432.b) and at least a part of the hierarchy elements of the lowest hierarchy level of the function hierarchy structure, are **characterized by** attributes, and wherein determining compatible connections in step (g) takes place depending on the compatibility of the attributes.

6. The method according to claim 5, wherein the compatible connections include a plurality of like connections, wherein like connections exist between channels (430.a, 430.b, 430.c, 430.d, 430.n, 432.a, 432.b) and hierarchy elements of the lowest hierarchy level of the function hierarchy structure having the same attributes, wherein the combination of the like connections forms a compatible collective connection.

7. The method according to one of claims 1 to 6, wherein in the case where it is determined in step (g) that there are more channels than hierarchy elements of the lowest hierarchy level belonging to the function hierarchy structure within the first and second partial hierarchy structure, the following step is additionally carried out in step (h) : (h') creating additional hierarchy elements of the lowest hierarchy level belonging to the function hierarchy structure and automatically configuring additional compatible connections using the created additional hierarchy elements.

8. The method according to one of claims 1 to 7, wherein step (e) allows the selection of any second hierarchy element from the second hierarchy structure.

9. The method according to one of claims 1 to 7, further comprising the following step, performed before step (d):
(k) for each of the hierarchy elements of at least a part of the second hierarchy structure, isolating a respective partial hierarchy structure comprising the respective hierarchy element and the hierarchy elements situated below the respective hierarchy element and checking whether at least one hierarchy element is located in the respective partial hierarchy structure for which a compatible connection is possible to a hierarchy element of the first partial hierarchy structure, wherein in step (d), only a selection of such hierarchy elements is allowed for the partial hierarchy structure of which a compatible connection was determined in step (k).

10. The method according to any one of claims 1 to 9, wherein at least steps (c) to (h) are performed in multiple passes, wherein compatible connections from an earlier pass are no longer available for a later pass.

11. The method according to one of claims 1 to 10, wherein at least steps (c) to (h) are performed in multiple passes, wherein, depending on the selection of the first and the second hierarchy element, step (h) comprises the following steps at least once:
deleting at least one old compatible connection configured in a previous pass and configuring at least one new compatible connection, wherein at least one hierarchy element of the old compatible connection is used for a new compatible connection.

12. A method for testing a control device having a test device (2) set up for testing the control device, comprising:
performing the method for connecting the input/output interface (4) of the test device (2) according to one of the preceding claims, and
performing a simulation in which the model present in the test device communicates with the control device (20) to be tested or the technical system to be controlled via the compatible connections which have been automatically configured in step (h) of the method.

13. A computer program product and computer program for performing a method for connecting an input/output interface (4) of a test device (2), that is
implemented such that a method according to one of claims 1 to 11 is performed.

14. A test device (2), which is set up for testing a control device, has an input/output interface (4) for connecting the control device to be tested (20) or for connecting a technical system to be controlled and has a model (8) of the technical system to be controlled or of the control device to be tested and a plurality of input/output functions (6) connected to the model, the test device (2) being set up for performing a method according to one of the claims 1 through 11.

15. A combination of a test device according to claim 14 and an external computing device connected thereto, such as a computer, tablet or mobile wireless device, the external computing device being set up to perform a method according to one of the claims 1 through 11.

## Revendications

1. Procédé pour connecter une interface entrée/sortie (4) d'un appareil de test (2) configuré pour tester un appareil de commande à un modèle d'un système technique présent dans l'appareil de test (2), sachant que l'interface entrée/sortie se présente sous une forme permettant de connecter l'appareil de commande (20) devant être testé ou permettant de connecter un système technique devant être commandé, et que le modèle devant être connecté à l'interface entrée/sortie (4) est un modèle (8) du système technique devant être commandé ou un modèle de l'appareil de commande devant être testé, sachant que l'appareil de test (2) présente en outre une multitude de fonctions entrée/sortie (6) reliées au modèle,
**caractérisé en ce que** le procédé comprend les étapes suivantes :
(a) fournir une structure hiérarchique d'interface qui est une image d'au moins une partie de l'interface entrée/sortie (4) de l'appareil de test (2), présente une multitude de niveaux hiérarchiques et est composée d'un premier ensemble d'éléments de hiérarchie (430, 432, 430.a, 430.b, 430.c, 430.d, 430.n, 432.a, 432.b), sachant que le premier ensemble d'éléments de hiérarchie comprend une multitude de canaux (430.a, 430.b, 430.C, 430.d, 430.n, 432.a, 432.b) de l'interface entrée/sortie (4), lesquels forment le niveau hiérarchique le plus bas de la structure hiérarchique d'interface,
(b) fournir une structure hiérarchique de fonction qui est une image de la multitude de fonctions entrée/sortie (6), présente une multitude de niveaux hiérarchiques et est composée d'un second ensemble d'éléments de hiérarchie (620, 622, 630, 632, 630.a, 630.b, 632.a, 632.b, 634.a, 634.b),
(c) permettre une sélection manuelle d'un premier élément de hiérarchie quelconque à partir d'une première structure hiérarchique quelconque, sachant que la première structure hiérarchique est soit la structure hiérarchique d'interface, ce par quoi la structure hiérarchique de fonction est déterminée comme la seconde structure hiérarchique, soit la première structure hiérarchique est la structure hiérarchique de fonction, ce par quoi structure hiérarchique d'interface est déterminée comme la seconde structure hiérarchique,
(d) permettre une sélection manuelle d'un second élément de hiérarchie à partir de la seconde structure hiérarchique, sachant que la sélection du second élément de hiérarchie n'est pas limitée à un niveau hiérarchique de la seconde structure hiérarchique qui correspond au niveau hiérarchique du premier élément de hiérarchie,
(e) isoler une première structure de sous-hiérarchie sur la base de la sélection du premier élément de hiérarchie, sachant que la première structure de sous-hiérarchie comprend le premier élément de hiérarchie et les éléments de hiérarchie situés en-dessous du premier élément de hiérarchie,
(f) isoler une seconde structure de sous-hiérarchie sur la base de la sélection du second élément de hiérarchie, sachant que la seconde structure de sous-hiérarchie comprend le second élément de hiérarchie et les éléments de hiérarchie situés en-dessous du second élément de hiérarchie,
(g) déterminer des liaisons compatibles entre les éléments de hiérarchie de la première structure de sous-hiérarchie et les éléments de hiérarchie de la seconde structure hiérarchique, en particulier, déterminer des liaisons compatibles entre les éléments de hiérarchie du niveau hiérarchique le plus bas de la première structure de sous-hiérarchie et les éléments de hiérarchie du niveau hiérarchique le plus bas de la seconde structure de sous-hiérarchie, et
(h) configurer automatiquement au moins une partie des liaisons compatibles de sorte que le modèle présent dans l'appareil de test (2) puisse communiquer avec l'appareil de commande (20) devant être testé ou le système technique devant être commandé via au moins la partie des liaisons compatibles.

2. Procédé selon la revendication 1, dans lequel l'étape (h) est **caractérisée en ce que** toutes les liaisons compatibles sont configurées automatiquement.

3. Procédé selon l'une des revendications 1 et 2, dans lequel l'étape (h) comprend : configurer automatiquement les liaisons de niveau supérieur, ce par quoi les éléments de hiérarchie de la première structure de sous-hiérarchie, qui sont situés au-dessus du niveau hiérarchique le plus bas, sont reliés avec les éléments de hiérarchie compatibles de la seconde structure de sous-hiérarchie, qui sont situés au-dessus du niveau hiérarchique le plus bas.

4. Procédé selon la revendication 3, dans lequel, pour la configuration automatique de liaisons de niveau supérieur, des éléments de hiérarchie supplémentaires, qui sont situés hors de la première structure de sous-hiérarchie au-dessus du premier élément de hiérarchie, et/ou des éléments de hiérarchie, qui sont situés hors de la seconde structure de sous-hiérarchie au-dessus du second élément de hiérarchie, sont pris en compte.

5. Procédé selon l'une des revendications 1 à 4, dans lequel au moins une partie des éléments de hiérarchique de la structure hiérarchique d'interface et au moins une partie des éléments de hiérarchie de la structure hiérarchique de fonction, en particulier au moins une partie des canaux (430.a, 430.b, 430.c, 430.d, 430.n, 432.a, 432.b) et au moins une partie des éléments de hiérarchie du niveau hiérarchique le plus bas de la structure hiérarchique de fonction sont **caractérisés par** des attributs, et dans lequel la détermination des liaisons compatibles de l'étape (g) est effectuée en fonction de la compatibilité des attributs.

6. Procédé selon la revendication 5, dans lequel les liaisons compatibles contiennent une multitude de liaisons similaires, dans lequel des liaisons similaires existent entre des canaux (430.a, 430.b, 430.c, 430.d, 430.n, 432.a, 432.b) et des éléments de hiérarchie du niveau hiérarchique le plus bas de la structure hiérarchique de fonction avec des attributs identiques, dans lequel la combinaison des liaisons similaires forme une liaison collective compatible.

7. Procédé selon l'une des revendications 1 à 6, dans lequel, dans le cas où il est déterminé à l'étape (g) qu'il existe dans la première et la seconde structure de sous-hiérarchie plus de canaux que d'éléments de hiérarchique du niveau hiérarchique le plus bas sur le côté de la structure hiérarchique de fonction, l'étape suivante est de surcroît exécutée à l'étape (h) : (h') créer des éléments de hiérarchie supplémentaires du niveau hiérarchique le plus bas du côté de la structure hiérarchique de fonction et configurer automatiquement des liaisons compatibles supplémentaires par utilisation des éléments de hiérarchie supplémentaires créés.

8. Procédé selon l'une des revendications 1 à 7, dans lequel l'étape (e) permet la sélection d'un second élément de hiérarchie quelconque depuis la seconde structure hiérarchique

9. Procédé selon l'une des revendications 1 à 7, comprenant en outre l'étape suivante, réalisé avant l'étape (d) :
(k) pour chacun des éléments de hiérarchique d'au moins une partie de la seconde structure hiérarchique, isoler une structure de sous-hiérarchie respective qui comprend l'élément de hiérarchie respectif et les éléments de hiérarchie situés vers le bas à partir de l'élément de hiérarchie respectif, et vérifier s'il existe dans la structure de sous-hiérarchie respective au moins un élément de hiérarchie pour lequel une liaison compatible avec un élément de hiérarchie de la première structure hiérarchique est possible, sachant que, à l'étape (d), est seule rendue possible une sélection de ceux des éléments de hiérarchie pour les structures de sous-hiérarchie desquels une liaison compatible a été constatée à l'étape (k) .

10. Procédé selon l'une des revendications 1 à 9, dans lequel au moins les étapes (c) à (h) sont réalisées en plusieurs passes, dans lequel des liaisons compatibles d'une passe antérieure ne sont plus disponibles pour une passe ultérieure.

11. Procédé selon l'une des revendications 1 bis 10, dans lequel au moins les étapes (c) à (h) sont réalisées en plusieurs passes, dans lequel l'étape (h) comprend au moins une fois les étapes suivantes en fonction de la sélection du premier et du second éléments de hiérarchie : supprimer au moins une liaison compatible ancienne configurée dans une passe antérieure et configurer au moins une nouvelle liaison compatible, sachant qu'un élément de hiérarchie au moins de la liaison compatible ancienne est utilisé pour une nouvelle liaison compatible.

12. Procédé pour tester un appareil de commande avec un appareil de test (2) configuré pour le test de l'appareil de commande, comprenant :
exécuter le procédé pour connecter l'interface entrée/sortie (4) de l'appareil de test (2) selon l'une des revendications précédentes, et
exécuter une simulation dans laquelle le modèle présent dans l'appareil de test communique avec l'avec l'appareil de commande (20) devant être testé ou le système technique devant être commandé via les liaisons compatibles qui ont été configurées automatiquement à l'étape (h) du procédé.

13. Produit de programme informatique ainsi que programme d'ordinateur pour exécuter un procédé pour connecter une interface entrée/sortie (4) d'un appareil de test (2), lequel se présente sous une forme telle que soit exécuté un procédé selon l'une des revendications 1 à 11.

14. Appareil de test (2) qui est configuré pour tester un appareil de commande, qui comporte une interface entrée/sortie (4) pour connecter l'appareil de commande (20) devant être testé ou pour connecter un système technique devant être commandé et un modèle (8) du système technique devant être commandé ou de l'appareil de commande devant être testé ainsi qu'une multitude de fonctions entrée/sortie (6) reliées au modèle,
dans lequel l'appareil de test (2) est configuré pour exécuter un procédé selon l'une des revendications 1 à 11.

15. Combinaison d'un appareil de test selon la revendication 14 et d'un appareil informatique externe connecté audit appareil de test, tel que, par exemple, un ordinateur, une tablette ou un appareil de radiocommunication mobile, dans laquelle l'appareil informatique externe est configuré pour exécuter un procédé selon l'une des revendications 1 à 11.
